# EUROPÄISCHE PATENTSCHRIFT

(11) **EP 2 445 735 B1**
(45) Veröffentlichungstag und Bekanntmachung des Hinweises auf die Patenterteilung: **06.04.2016**
(21) Anmeldenummer: 10786983.6
(22) Anmeldetag: 24.06.2010
(51) Int. Cl.: B60G 17/015

(54) **STROMGEWINNUNGS-FEDERUNGS-SYSTEM FÜR HYBRID- UND ELEKTROAUTOS**
ELECTRICITY GENERATING SUSPENSION SYSTEM FOR HYBRID AND ELECTRIC AUTOMOBILES
SYSTÈME D'AMORTISSEMENT PRODUISANT DU COURANT POUR VÉHICULES HYBRIDES ET ÉLECTRIQUES

(30) Priorität: 24.06.2009 DE 102009060999
(43) Veröffentlichungstag der Anmeldung: 02.05.2012
(73) Patentinhaber: INTERTRONIC GRESSER GMBH, 97072 Würzburg (DE)
(72) Erfinder: GRESSER, German, 97072 Würzburg (DE)
(74) Vertreter: advotec.
(86) Internationale Anmeldenummer: PCT/DE2010/000727
(87) Internationale Veröffentlichungsnummer: WO 2010/149149

(56) Entgegenhaltungen:
- CN-A- 1 739 996
- DE-A1- 4 134 730
- DE-A1- 4 212 839
- DE-A1- 10 147 720
- DE-A1- 10 203 802
- DE-A1-102006 035 759
- DE-U1- 29 518 322
- JP-A- 4 215 510
- JP-A- 5 044 754
- JP-A- 10 047 405
- JP-A- 2001 310 736
- US-A- 5 060 959
- US-A1- 2007 175 716

## Beschreibung

Die Automobilindustrie steht derzeit unter starkem politischen und ökonomischen Druck den geforderten CO2-Grenzwert von 120 g/km der als "Flottendurchschnitt" bis 2015 mindestens erreicht werden soll technisch zu realisieren.

Angesichts des bekannten unabwendbar nahenden Endes der Erdölförderung in ausreichender Menge möglicherweise spätestens in 20-30 Jahren und einer Entwicklungszeit von mindestens 10 Jahren für serientaugliche Elektroautos wird es für die Industrie allerhöchste Zeit, sich von der veralteten Technologie Verbrennungsmotor zu verabschieden,und auch den im Wirkungsgrad unrentablen Irrweg Wasserstoffmotor aufzugeben, denn Elektroantriebe sind in vielerlei Hinsicht die Ideallösung für Kraftfahrzeuge.

Zwar ist richtig,dass die neu von der Industrie geplanten Elektroautos noch erhebliche Mängel haben, nämlich ungenügende Strom-Speicherkapazität der verwendeten Batterien und daraus folgend, ungenügende Fahrtreichweite.

Dazu kommen derzeit noch weitere Nachteile,beispielsweise hohes Gewicht und Volumen der Lithium-Ionen-Akkus mit enormen Herstellungskosten und derzeit noch ungewisser Lebensdauer und viel zu langer Wiederaufladezeit von mehreren Stunden. In naher Zukunft wird es zwar erhebliche Verbesserungen und technische Fortschritte geben. Trotzdem bleiben die grundsätzlichen Batterieprobleme den Elektroautos erhalten, wenn nicht vollkommen neue Wege zur Energieoptimierung mit fahrzeuginterner Stromerzeugung in Elektroautos eingeschlagen werden um diese Probleme zumindest teilweise zu kompensieren, was das Ziel dieser Erfindung ist.

Eine bekannte Methoden kinetische Energie während der Fahrt im Elektroauato zurückzugewinnen ist die Generatorfunktion des Antriebsmotors beim Bremsen. Die Menge der so rekuperierten Energie ist aber relativ gering.

Diese Erfindung bietet die Möglichkeit, dem Hybrid- und Elektroauto in neuartiger Weise und in erheblicher Menge während der Fahrt Energie zuzuführen durch eine fahrzeuginterne,autarke Energiegewinnung aus Umwandlung der beim Fahren vorhandenen kinetischen Energie, insbesondere aus relevanten Komponenten der Gravitations- und Fliehkraftenergie in Elektrizität.

Es gibt viele Variationen der technischen Realisierung dieser Erfindung. In dieser Beschreibung werden nur einige vorteilhafte,bevorzugte Varianten dargestellt. Alle weiteren denkbaren und daraus ableitbaren Versionen sind ebenfalls Gegenstand dieser Erfindung und der daraus abgeleiteten Schutzrechte.

Dazu wird einerseits auf die untergeordneten Patentansprüche und andererseits auf die nachfolgenden Erläuterungen der bevorzugten Ausführungsformen verwiesen. Dabei sollen auch diejenigen vorteilhaften Ausgestaltungen der Erfindungsidee einbezogen sein, die sich aus einer beliebigen, variablen Kombination der Unteransprüche und Verfahren ergeben,ebenso auch diejenigen ohne Zeichnung.

In den Zeichnungen sind unter Weglassung von Details, die dem Fachmann nach dem allgemeinen Stand der Technik bekannt sind, oder entsprechend der in den angeführten vorbekannten Patent-und Offenlegungsschriften offenbarten Lehre als bekannt gelten können,als schematische, vereinfachte Darstellungen bevorzugter Ausführungsformen der erfindungsgemäßen Vorrichtungen und Verfahren gezeigt.

Unter "Elektrofahrzeug" oder "Elektroauto/Hybridauto" sind nicht nur Personenkraftfahrzeuge (PKW) zu verstehen, sondern auch alle anderen ein-oder zweispurigen straßengängigen Fortbewegungsmittel wie Lastkraftwägen (LKW), Omnibusse und zweirädrige Fahrzeuge wie Fahrräder mit Elektrohilfsmotor, Elektroroller oder Elektromotorräder, - und Dreiräder, elektrifizierte Rollstühle usw. Zumindest teilweise können verschiedene Teile der beschriebenen technischen Lehre, Erfindungssysteme,Komponenten und technischen Verfahren auch bei Militärfahrzeugen,beispielsweise Panzern und sonstigen Militärfahrzeugen einschließlich Anhängern eingesetzt werden.

Möglich und ebenfalls in dieser Erfindung und den Patentansprüchen inbegriffen ist der zumindest teilweise Einsatz von Erfindungskomponenten in geeigneter und modifizierter Form oder Variation bei schienengebundenen Fahrzeugen wie Eisenbahnen, Straßenbahnen, U-Bahnen, Hochbahnen, Magnetschwebezügen (Transrapid) oder auch bei Bergwerksfahrzeugen usw.

In den Patenten und Offenlegungsschriften US 4 032 829 vom 22.08.1975, US 5 578 877 vom 13.06.1994, DE 295 18 322 U1 vom 18.11.1995, US 6 952 060 B2 vom 07.05.2001, DE 102 20 846 A1 vom 08.05.2002 und WO 2005/089347 A3 werden Stossdämpfer für Kraftfahrzeuge beschrieben, die beim Ein-und Ausfedern der Fahrzeugräder-Aufhängung durch im Stossdämpfer integrierte sogenannten Lineargeneratoren Strom erzeugen.Die Funktionsweise ist prinzipiell technisch-physikalisch identisch mit den bekannten Rotationsgeneratoren zur Stromerzeugung und ist bekannter Stand der Technik,weshalb auf eine nähere Beschreibung verzichtet wird.

Dies sind erste Ansätze zur Stromherstellung durch die Umwandlung von kinetischer Energie und Gravitationsenergie, die beim Fahren auf die Fahrzeug-Karosserie einwirkt. Die Elektrizität wird hier durch die Vertikalbewegungen der Räder während der Fahrt in diesen "Generator-Stossdämpfern" erzeugt.

Aus der JP 10 047405 ist ein Verfahren zur fahrzeuginternen Stromerzeugung durch Umwandlung von kinetischer Energie bekannt.

Nachteilig ist bei diesen und ähnlichen Erfindungen, dass die Ausbeute an Strom mit schätzungsweise maximal 5% verhältnismäßig gering ist,da konstruktionsbedingt nur ein sehr geringer Teil der auf das Fahrzeug einwirkenden Gravitations-Energie aufgenommen und in Elektrizitäts-Energie umgewandelt werden kann.Den Hauptanteil der Gravitations-Energie nehmen die Reifen mit ihren Walkbewegungen,die negative Beschleunigungs-Energie der federnden Räder (Gewicht) und die Federungselemente der Radaufhängungen auf und wandeln die jeweils einwirkenden Komponenten der Gravitations-Energie weitgehend in unnütze und unerwünschte Beschleunigungs-Kräfte der Karosserie (Auf-und Abbewegungen) oder Wärmeenergie um, die an die Atmosphäre abgegeben wird.

Hier setzt der Haupt-Erfindungsgedanke der vorliegenden Erfindung an, deren wesentliches Ziel ein energieautarkes Fahrzeug mit fahrzeuginterner Energiegewinnung ist,um so das Elektrofahrzeug mit ausreichender Energiekapazität auszustatten um die bisherige ungenügende fahrzeuginterne Speicherkapazität zu kompensieren und damit den Hauptnachteil heutige Hybrid- Elektroauto-Konstruktionen nach dem Stand der Technik,nämlich mangelnde Fahrtreichweite und die sehr lange Nachladezeit der obendrein sehr teuren und voluminösen Stromspeicherelemente (Akkus/Kondensatoren) zu beseitigen.

Ein weiterer,enormer volkswirtschaftlicher Vorteil und für die Autobesitzer sehr positiver Nebeneffekt dieser Erfindung ist,dass die Betriebskosten (Benzin, Diesel, Gas und Wartung mit Ölwechsel) fast komplett wegfallen beziehungsweise deutlich reduziert sind.

In Weiterentwicklung des Standes der Technik zur Elektrizitätsgewinnung aus Umwandlung von kinetischer und Gravitationsenergie gemäß dem oben zitierten Stand der Technik und analogen Erfindungen werden erfindungsgemäß die nachfolgend beschriebenen neuartigen Technologien zur Stromherstellung aus Gravitation und kinetischer Energie (horizontale Fliehkraft, vertikale Beschleunigung) vorgeschlagen wie folgt:
1. Stromenergiegewinnung durch prinzipiell bekannte Lineargeneratoren,die im Innenradius der Fahrzeugräder, bevorzugt an die Radaufhängungen gekoppelt oder in oder an der Fahrzeugkarosserie nahezu vertikal oder in beliebigem,geeigneten Winkel geneigt angebracht sind und während der Fahrt durch die gravitationsbedingten Vertikalbewegungen der Räder oder der Karosserie den an einer Führungsschiene frei beweglichem Aktuator (Magnetelement) des Lineargenerators im elektromagnetischem Feld eines ihn räumlich umgebenden Stators vertikal auf-und abbewegt wodurch gemäß den bekannten Induktionsgesetzen Strom erzeugt wird,der zur Batterie und/oder zu Hochleistungs-Kondensatoren geleitet und dort gespeichert wird.
2. Stromenergiegewinnung durch Lineargeneratoren, die an geeigneter Stelle in, an oder unter der Fahrzeugkarosserie nahezu horizontal mit Wirkungsachse 90 Grad zur Fahrzeug- Längsachse (Fahrtrichtung) angeordnet sind,die mit einem an einer Führungsschiene frei beweglichem Aktuator des Lineargenerators im ihn umgebenden elektromagnetischem Feld des Stators durch die in Kurven auf die Karosserie einwirkende Fliehkraft bewegt wird, wodurch Strom erzeugt, an die Batterie zur Zwischenspeicherung weitergeleitet wird.
3. Stromenergiegewinnung durch Lineargeneratoren, die an geeigneter Stelle in,an oder unter der Fahrzeugkarosserie nahezu horizontal mit Wirkungsachse Null Grad zur Fahrzeug-Längsachse (Fahrtrichtung) angeordnet sind,die mit einem an einer Führungsschiene frei beweglichem Aktuator (Magnetelement) des Lineargenerators im ihn umgebenden elektromagnetischem Feld des Stators durch die auf die Karosserie einwirkenden kinetischen Energien (positive und negative Beschleunigungen) beim Beschleunigen oder Bremsen des Fahrzeuges bewegt wird, wodurch Strom erzeugt wird, der an die Batterie weitergeleitet und dort zwischengespeichert wird.
4. Stromenergiegewinnung durch Lineargeneratoren, die an geeigneter Stelle in,an oder unter der Fahrzeugkarosserie angeordnet sind,und deren im elektromagnetischem Feld des Stators an einer Linearführung beweglicher Aktuator (Magnetelement) des Lineargenerators mit geeigneten mechanischen, hydraulischen, pneumatischen oder geeignet kombinierten und ausgestalteten Vorrichtungen der oben genannten Art, wovon mindestens ein Aktuator mit einem Fahrzeugrad bzw dessen Radaufhängung gekoppelt ist und während der Fahrt durch die Unebenheiten der Fahrbahnoberflächen mit den korrespondierenden Beschleunigungen durch Gravitation, die jeweiligen Bewegungen aufnimmt bzw. aufnehmen und kongruent den/die Aktuator(en) im elektromagnetischen Feld bewegt bzw bewegen und damit Strom erzeugt bzw erzeugen, der zur Batterie geleitet und dort gespeichert wird. Eine detaillierte technische Funktionsbeschreibung wird im nachfolgend beschriebenen bevorzugtem Ausführungsbeispiel dargestellt.

Nachfolgend wird beispielhaft ein erfindungsgemäßes System zur Stromerzeugung im Fahrzeug durch Umwandlung von kinetischer Energie und Gravitation beschrieben,das gegenüber den bekannten Lineargeneratoren,die in konventionellen Automobil-Stossdämpfern integriert sind, wie oben genannt, ein vielfaches an Stromenergie produziert.

In diesem Zusammenhang ist auch der Stand der Technik für sogenannte "Aktive Fahrwerk- oder Federungssysteme" für Kraftfahrzeuge zu zitieren. Dies sind unter anderem die Druckschriften DE 102 13 156 A1, DE 42 12 839 A1, DE 103 30 344 A1, DE 38 44 803 C2, DE 41 18 823 A1, DE 43 34 227 A1, DE 41 20 758 A1, DE 36 31 876 A1, DE 41 14 783 A1, DE 38 23 044 A1, DE 195 21 747 A1, DE 42 21 088 A1, EP 0 284 053 B1, EP 0 470 991 B1, EP 0 681 533 B1, EP 0 470 166 B1, EP 0 371 709 B1, EP 0 569 429 B1, EP 0 470 993 B1, EP 0 471 734 B1

Die bisher übliche Fahrzeug-Federung besteht je Rad aus einer an der Radaufhängung wirkenden Stahlfeder mit einem nicht regelbaren hydraulischen Stoßdämpfer. Diese Konstruktion wird "passives Fahrwerksystem" genannt.

Daneben gibt es sogenannte "aktive hydropneumatische Federungen", die aus einem Differentialzylinder,einem Gasdruckspeicher als Federelement mit einer konstanten oder elektronisch regelbaren Drossel als Dämpferlement mit Regelventil und Konstantpumpe bestehen.

Die neuesten, verbesserten Entwicklungen sind Fahrwerksysteme, die als "vollaktive Federung" bezeichnet sind. Hier werden die bisherigen Federungskomponenten Stahlfeder und hydraulischer Stoßdämpfer durch ein elektronisch geregeltes Stellglied ersetzt, das auf vielfache Weise durch die Kommandosignale der Steuerungselektronik die Federungseigenschaften beeinflußt und dadurch die Fahrzeug-Straßenlage wesentlich verbessert.

Dazu gehören eine Niveauregulierung, schnelle Nachregelung der Hubbewegungen der Räder, Ausregelung von dynamischen Kräften zur Vermeidung von Nick-und Wankbewegungen der Karosserie, Veränderung des Dämpfungseffektes (Härtegrad der Federung) und so weiter.Der Hauptvorteil dieser Konstruktionen ist die variable elektronisch regelbare Veränderung der Fahrwerkseigenschaften,die eine deutlich verbesserte Straßenlage und dadurch verbesserte Fahrsicherheit bewirkt.

Der grundsätzliche systemische Nachteil ist,dass die auf die Karosserie einwirkenden Kräfte als Resultierenden der Vektoren aus den kinetischen Energien der vertikalen Fahrzeugbewegungen die zum größten Teil Komponenten der durch Fahrbahnunebenheiten einwirkenden Gravitationskräfte sind, nicht genutzt werden um daraus Strom zu gewinnen. Statt dessen werden diese Energien durch die Federn,Dämpferelemente, Drosseln usw. nutzlos in Wärme umgewandelt oder aber teilweise als unerwünschte Fahrzeugbewegungen,nämlich hauptsächlich in Vertikal-Beschleunigungen der Karosserie.

Ein erster,allerdings völlig ungenügender Schritt,diese kinetischen und Gravitationsenergien in Strom umzuwandeln und zu nutzen sind die bereits oben zitierten Erfindungen betreffend Stoßdämfern mit integrierten Lineargeneratoren oder Rotationsgeneratoren. Deren Wirkungsgrad dürfte jedoch schätzungsweise bei nur maximal 5% liegen, da der Hauptteil der auf das Fahrzeug einwirkenden Gravitationsenergie von den Fahrzeugfedern oder hydraulischen Drosselventilen der Stoßdämpfer vernichtet wird.

Ausgehend vom Stand der Technik ist die Aufgabe dieser Erfindung diese bekannten aktiven Fahrwerksfederungssysteme in neuartiger Weise fortzubilden,indem die letztlich energievernichtenden Komponenten Stahlfeder,hydraulischer Stoßdämpfer, Drosselventile usw. ersetzt werden durch ein System,das zwar einerseits die Federungs- und Dämpfungsfunktionen wie bisherige "aktive" Systeme realisieren kann aber andererseits alle kinetischen und Gravitationsenergie-Komponenten zu nahezu 100% in Elektrizität umwandelt.

Einige bevorzugte Beispiele der vielfach variierbaren Ausführungsformen eines energieautarken Fahrzeuges werden nachfolgend in vereinfachter prinzipieller Systembeschreibung dargestellt unter Weglassung von technischen Selbstverständlichkeiten,die dem Fachmann geläufig sind,die aber ebenso wie die nicht explizit dargestellten denkbaren Variationen oder Kombinationen Teil der Erfindung sind.

In den Zeichnungen sind benannt:
**(1)** Fahrzeugrad
**(2)** Federungselement (**mit integriertem Lineargenerator**)
**(2a/b/c)** Kolbenstangenführungen (Lager mit Dichtring)
**(3)** Fahrzeug-Karosserie
**(3a)** Federbein-Aufhängung
**(4)** Radaufhängung (Dreieckslenker)
**(4a/4b)** Gelenk/Lagerung
**(5)** Hydraul.Feder-und Dämpferelement, **ohne Lineargener.**
**(DZ)** Druckzylinder
**(DK)** Druckkammer (DK.1 bis DK.x)
**(KO)** Druckkolben
**(DS.1)** Drucksensor 1
**(DS.2)** Drucksensor 2
**(6)** Kolbenstange (6.1 und 6.2)
**(6a)** Aktuatorführung
**(7)** Lineargenerator
**(8)** Stator
**(9)** Hydraulikleitung
**(9a)** Hydraulikleitung zu Druckkammer
**(9b)** Hydraulikleitung zu Druckkammer
**(9c)** Hydraulik-Bypassleitung
**(P.1)** Hydraulikpumpe 1 für Druckkammer 4
**(P.2)** Hydraulikpumpe 2 für Druckkammer 3
**(P.3)** Hydraulikpumpe 3 für Druckkammer 2
**(P.4)** Hydraulikpumpe 4 für Druckkammer 1
**(11)** Aktuator vom Lineargenerator ("Anker")
**(11a)** Dichtungsring
**(11b)** Aktuator-Führungsstange
**(11c)** Lager/Führung
**(12)** Hydraulikventil
**(12a)** Drucksensor
**(12b)** Regelventil
**(13)** Hydraulikreservoir
**(14)** Rückschlagventil/Sperrventil
**(15)** Hochdruckspeicher/Gasdruckspeicher
**(16)** Regelelektronik/Microprozessor
**(17)** Dichtung
**(18)** Rotationslader
**(DZ.1)** Druckzylinder **1**
**(DK.1)** Druckkammer **1** von Druckzylinder 1
**(DK.2)** Druckkammer **2** von Druckzylinder 1
**(KO.1)** Druckkolben **1** von Druckzylinder 1
**(DZ.2)** Druckzylinder **2**
**(DK.3)** Druckkammer **1** von Druckzylinder 2
**(DK.4)** Druckkammer **2** von Druckzylinder 2
**(KO.2)** Druckkolben **1** von Druckzylinder 2
**(6.1)** Kolbenstange von Druckzylinder 1
**(6.2)** Kolbenstange von Druckzylinder 2
**(9.1a)** Druckleitung für Druckkammer DK.1
**(9.1b)** Druckleitung für Druckkammer DK.2
**(9.2a)** Druckleitung für Druckkammer DK.3
**(9.2b)** Druckleitung für Druckkammer DK.4
**(S.1)** Mittellagen-Sensor von Aktuator 11
**(VG)** Vector Karosserie-Gewicht
**(VB)** Vector Beschleunigung (Radfederungsbewegung)
**(A)** Abstand Druckkolben KO.1 zu KO.2
**(OT.1)** Oberer Totpunkt von Druckkolben KO.1
**(UT.1)** Unterer Totpunkt von Druckkolben KO.1
**(OT.2)** Oberer Totpunkt von Druckkolben KO.2
**(UT.2)** Unterer Totpunkt von Druckkolben KO.2
**(X1/X2)** Kolbenhub von Druckkolben KO.1
**(Y1/Y2)** Kolbenhub von Druckkolben KO.2
**(ML.1)** Mittellage von Druckkolben KO.1
**(ML.2)** Mittellage von Druckkolben KO.2
**(ML.3)** Mittellage von Aktuator 11
**(K.hydr)** Hydraulische Druckkraft
**(K.mag)** Magnetische Gegenkraft (Induktionskraft)
**(W.vert)** Weg Vertikal (Federwegbeschleunigung)
**(P1/P2)** Hydraulik-Hochdruckpumpe für Druckzylinder 1
**(P3/P4)** Hydraulik-Hochdruckpumpe für Druckzylinder 2
**(DSP.1)** Hochdruckspeicher für Hydraulikpumpe P1 und P2
**(DSP.2)** Hochdruckspeicher für Hydraulikpumpe P3 und P4
**(V1/2)** Vierwege-Schaltventil für Hydraulikpumpe P1 und P2
**(V3/4)** Vierwege-Schaltventil für Hydraulikpumpe P3 und P4
**(V1.1, V2.1, V3.1, V4.1)** Sperrventil in Hydraulikzuleitung
**(V1.2, V2.2, V3.2, V4.2)** Mehrweg-Schaltventil in Zuleitung
**(V1.3, V2.3, V3.3, V4.3)** Sperrventil mit Drosselfunktion
**(DS1.1, DS1.2, DS2.2,DS3.1, DS3.2, DS4.2)** Drucksensor
**(19)** Radnabenmotor
**(20)** Halterung vom Lineargenerator
**(20a)** Halterungsschenkel
**(21)** Radnabe
**(22)** Radfelge
**(23)** Stator-Innenwandzylinder
**(33)** Hydromotor
**(34)** Druckverstärker
**(F)** Radfederweg
**(LA)** Lenkachse
**(Vp.1)** Vector Gegendruck in Druckkammer 1 (DK.1)
**(Vp.2)** Vector Gegendruck in Druckkammer 2 (DK.2)
**(DS)** Druck-Sensor
**(WS)** Weg-Sensor
**(PS)** Positions-Sensor
**(BS)** Beschleunigungs-Sensor
**(GS)** Geschwindigkeits-Sensor
**(FS)** Fliehkraft-Sensor (Quer-Beschleunigungs-Sensor)
**(LS)** Längs-Beschleunigungs-Sensor, horizontal
**(VS)** Vertikal-Beschleunigungs-Sensor
**(NS)** Niveau-Sensor

Nachfolgend wird schematisch die generelle Funktion der Stromerzeugung durch kinetische Energie und Gravitation dargestellt. Von den vielfachen variablen Konstruktionen werden einige bevorzugt geeigneten Ausführungsvarianten beschrieben,wobei die nach dem Stand der Technik bekannten technischen und physikalischen Grundlagen nicht näher angesprochen oder beschrieben werden, da sie im Bedarfsfall aus der Fachliteratur und den zitierten Druckschriften entnommen werden können.

Des weiteren wird insoweit eine vereinfachte Beschreibung verwendet,indem beispielsweise die Darstellung "die Pumpe erhöht den Druck" oder das "Ventil schaltet" usw. bedeutet, dass diese Vorgänge jeweils von der übergeordneten Regelelektronik (16) und/oder einem zugehörigen Microprozessor elektronisch aktiviert oder deaktiviert wird gemäß den in der Programmierung hinterlegten Algorithmen ohne dass dies jeweils explizit erwähnt wird.

Alle beschriebenen und denkbaren Varianten der diversen Vorrichtungen sowie deren Funktionen und Verfahren in den Ausführungsbeispielen gelten sinngleich auch für alle anderen Ausführungsbeispiele und ebenfalls bei den nicht beschriebenen denkbaren Varianten,auch wenn in der Beschreibung nicht explizit darauf hingewiesen wird.

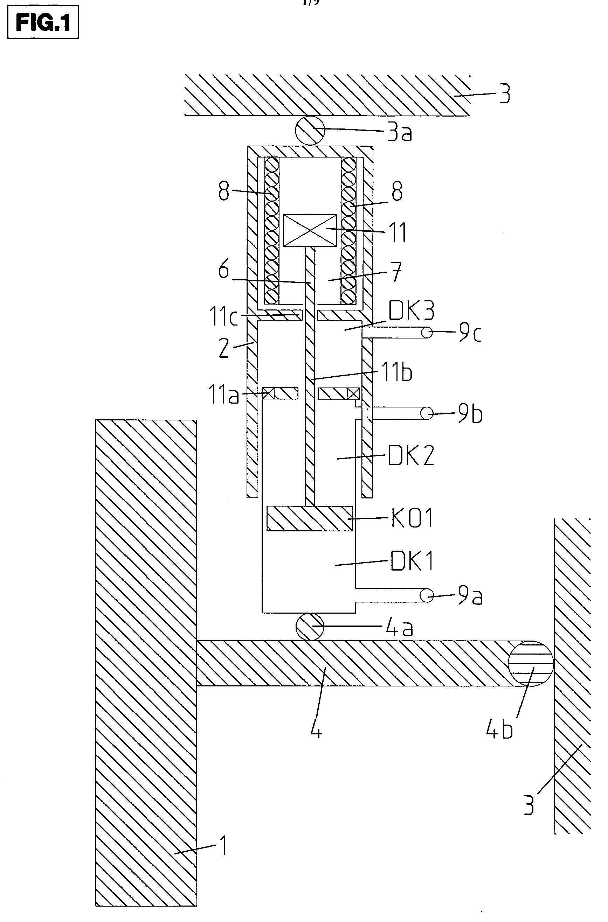

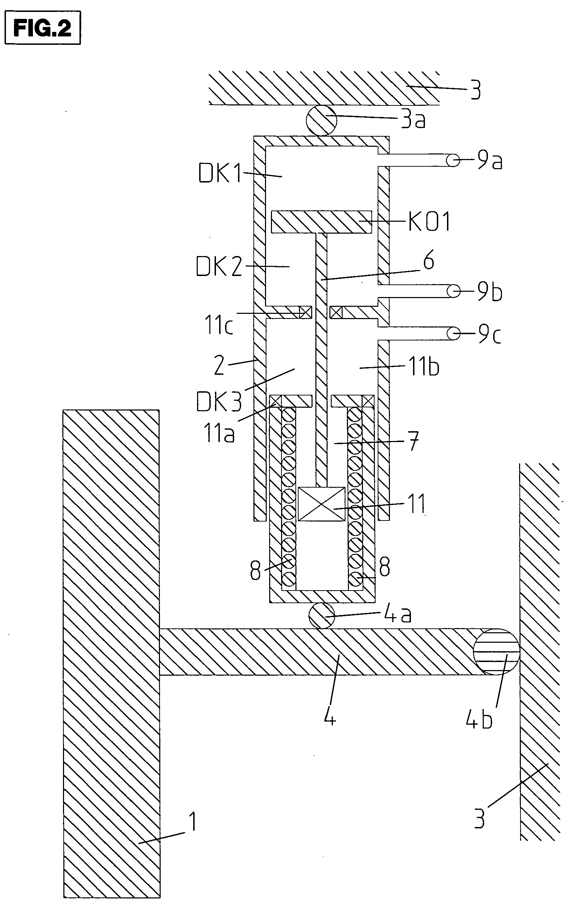

**Fig.1** und **Fig.2** zeigen ein erstes nicht erfindungsgemässes Ausführungsbeispiel als prinzipiellen, identischen und schematischen Vertikalschnitt eines Fahrzeugrades **(1)** mit einer Radaufhängung **(4)** die mit dem Gelenk **(4b)** an der Karosserie **(3)** befestigt ist und einem Federungselement **(2)** mit integriertem Lineargenerator **(7)** in der neuartigen erfindungsgemäßen Konstruktion. Dieses Federelement **(2)** übernimmt nicht nur die bekannten Funktionen der Federung und Dämpfung wie bei der üblichen Spiralfeder und dem Hydraulikstoßdämpfer sowie sämtliche weiteren Funktionen der oben erwähnten verbesserten Version der "aktiven Federungssysteme" sondern realisiert zusätzlich noch die erfindungsgemäße Stromherstellung durch die beim Fahren auftretenden vertikalen Radbewegungen und deren kinetischer Energie als Komponenten der auf das Fahrzeug einwirkenden Gravitation.Im Gegensatz zu der bislang bekannten Konstruktionen entfallen also Spiralfeder oder Luftfederelemente und Stoßdämpfer komplett.

Das Federungselement **(2)** ist am unteren Ende durch ein Gelenk **(4a)** mit der Radaufhängung **(4)** verbunden und an seinem oberen Ende durch die Federbein-Aufhängung **(3a)** mit dem oberen Teil der Karosserie **(3)** verbunden.Im Inneren befinden sich ein stromproduzierender Lineargenerator **(7)** der aus dem Stator **(8),** dem Aktuator **(11)** und der Aktuatorführung besteht. Der Stator **(8)** besteht aus stromführenden wicklungen, und weist bevorzugt einen innenliegenden zylinderförmigen Hohlraum auf in dem der Aktuator **(11)** bevorzugt als zylinderförmiges Bauteil an der Aktuatorführung befestigt ist und beim Bewegen der Aktuatorführung innerhalb des Statormagnetfeldes mit einem minimalen Luftspalt auf- und abgleiten kann und damit durch Induktion Strom produziert.

Der zusammen mit den Druckkolben **(KO.1)** und **(KO.2)** vertikal bewegliche Aktuator **(11)** kann alternativ auch aus stromführenden Wicklungen bestehen oder bevorzugt als geeignet geformter und dimensionierter Permanentmagnet ausgeführt sein.

Die Aktuatorführung **(6a)** ist in ihrem weiteren Verlauf mit der Kolbenstange **(6)** verbunden, die am gegenüberliegenden Ende den Druckkolben **1 (KO.1)** trägt.Der Druckkolben **1 (KO.1)** ist Teil des hydraulischen Feder-und Dämpferelementes **(5)** benannt als Druckzylinder **1 (DZ.1)**, das mindestens zwei,optimalerweise vier Druckkammern **(DK.1/ DK.2/DK.3)** aufweist. Der unter dem Druckkolben **1 (KO.1)** befindliche Teil des Druckzylinders **1 (DZ.1)** ist als Druckkammer **1 (DK.1)** benannt,der über dem Druckkolben **1 (KO.1)** befindliche Teil des Druckzylinders **1 (DZ.1)** ist als Druckkammer **2 (DK.2)** bezeichnet. Durch mindestens einen am Druckkolben **(KO.1)** montierten Dichtring **(11a)** werden beide Druckkammern **1 (DK.1)** und **2 (DK.2)** hydraulikdruckmäßig von einander getrennt.

Die Gehäuse des Federungselementes **(2)** und des Lineargenerators **(7)** sind vorzugsweise zylindrisch ausgeführt und mit Führungen, beispielsweise Gleitführungen **(2c)** Kugeloder Wälzlagern, oder bevorzugt Linearkugellagern teleskopartig gegeneinander verschiebbar gelagert und mit mindestens einem Dichtring **(11a)** abgedichtet, sodass im inneren Zwischenraum der beiden Gehäuseteile eine dritte Druckkammer **3 (DK.3)** gebildet ist.

Die Aktuatorführung **(6a)** und die Kolbenstange **(6)** werden in mindestens zwei Führungen **(2a/b)** geführt.In die mindestens drei Druckkammern **(DK.1/DK.2/DK.3)** führen mindestens drei Hydraulikleitungen **(9a/b/c).** In einer verbesserten Ausführung sind mindestens sechs Hydraulikleitungen vorgesehen, drei für Zuleitung und drei zur Ableitung des Fluids, wodurch ein schnellerer Druckwechsel durch die erhöhte Fließgeschwindigkeit des Fluids gewährleistet ist.

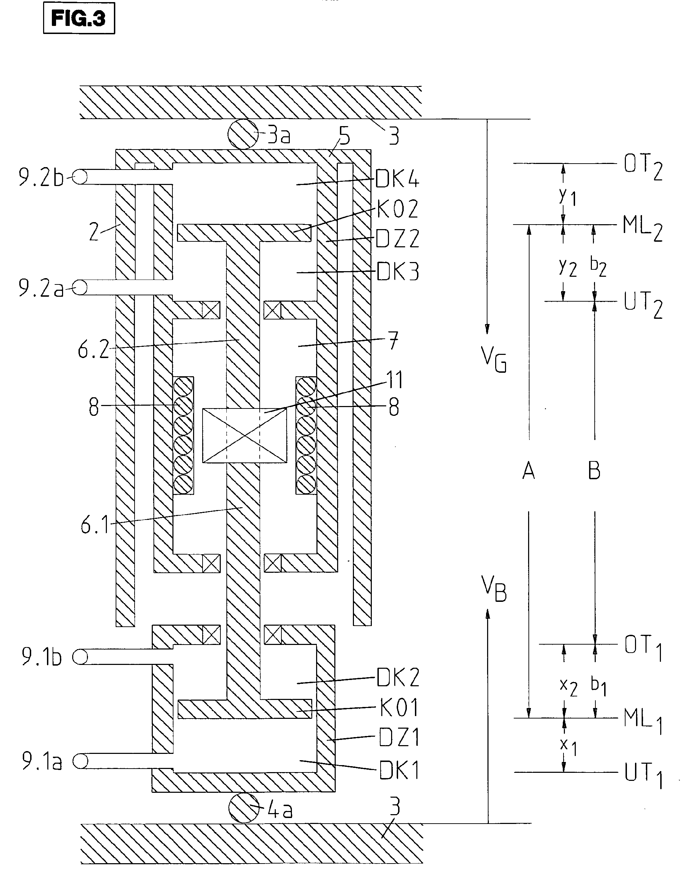

Alle sinngleichen Eigenschaften und Funktionen werden in den weiteren Versionen nicht nochmals beschrieben In **Fig.3** wird eine weitere,verbesserte Version des Ausführungsbeispiels dargestellt, die im Gegensatz zu **Fig. 1** und **Fig.2** zwei Druckkolben **1 (KO.1)** und **2 (KO.2)** aufweist.Hierdurch können statt drei insgesamt vier Druckkammern **1** bis **4 (DK.1/DK.2/DK.3/DK.4)** realisiert werden, wodurch noch verbesserte technische Möglichkeiten gegeben sind, die nachfolgend dargestellt werden. In diesem Ausführungsbeispiel sind für jede Druckkammer **DK.1/DK.2 /DK.3/DK.4)** je eine Hydraulikleitung **(9.1a/9.1b/9.2a/ 9.2b)** vorgesehen.

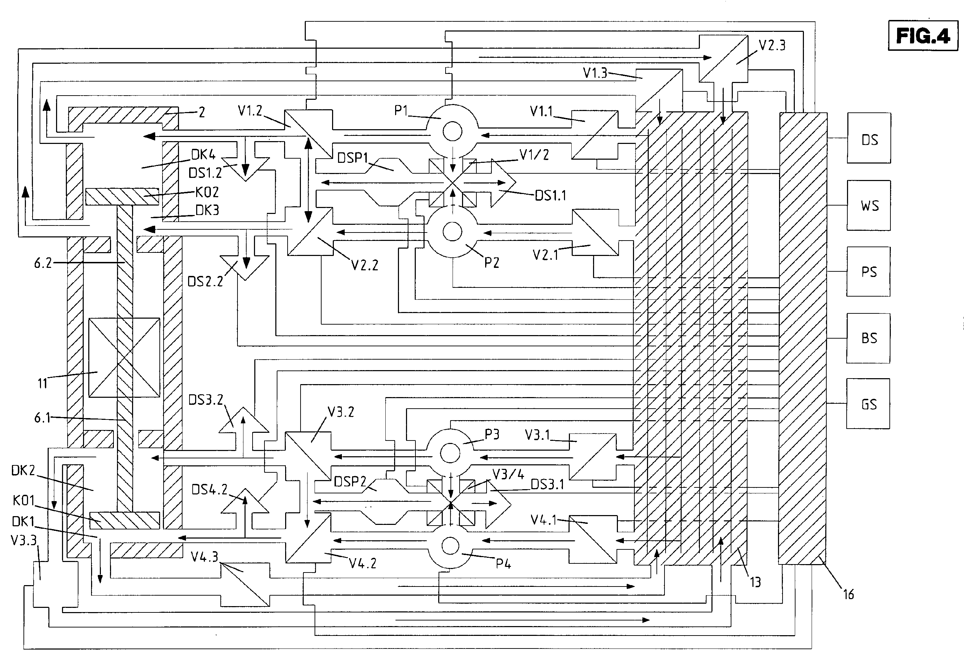

**Fig.4** zeigt beispielhaft einen Pneumatik,-oder bevorzugt Hydraulikschaltplan mit Regelelektronik **(16)** und den diversen Sensoren sowie vier Hydraulik-Zuleitungen **(9.1a/ 9.1b/9.1 c/9.1d)** und vier Hydraulik-Ableitungen **(9.2a/ 9.2b/9.2c/ 9.2d).** Die Druckversorgung übernimmt mindestens eine Hydraulikpumpe **(P.1),** die bevorzugt eine oszillierende Pumpe mit einem nachgeschaltetem Druckverstärker **(34)** ist. Der HydraulikSchaltplan ist in vereinfachter Systematik dargestellt.Hier sind viele Varianten möglich,beispielsweise können aus Kostengründen statt der gezeigten vier Hydraulikpumpen nur eine oder zwei verwandt werden,wobei dann die Hydraulikleitungen und das Ventilsystem entsprechend modifiziert ist.

Der mindestens eine Lineargenerator **(7)** ist hierbei mittig zwischen den beiden Doppeldruckkammern **1** und **2 (DK.1/DK.2)** sowie **3** und **4 (DK.3/DK.4)** mit den zugehörigen Druckkolben **1 (KO.1)** und **2 (KO.2)** angeordnet **(****Fig.3****)** wobei die jeweiligen Kolbenstangen **(6.1)** und **(6.2)** miteinander verbunden sind und mittig davon der Aktuator **(11)** des Lineargenerators **(7)** fest montiert ist.

Alternativ können auch zwei Lineargeneratoren **(7)** an den äußeren Seiten der dazwischen befindlichen mindestens einen Doppeldruckkammer **1 (DK.1)** und optional der Doppeldruckkammer **2 (DK.2)** vorgesehen sein.

Die grundsätzliche Funktion des Federungselementes **(2)** mit integriertem Lineargenerator **(7)** gezeigt in **Fig.3** und **Fig.4** ist wie folgt. Von einer geeigneten Hydraulik-Hochdruckpumpe **(P.4)** wird über mindestens eine Hydraulikleitung **(9.1a)** Hydraulikfluid in die Druckkammer **1 (DK.1)** gepumpt. Dadurch wird der Kolben **1 (KO.1)** von seinem unteren Totpunkt **(UT.1)** in Richtung des Vectors **(VB)** angehoben.

Wenn dieser den Weg **(X1)** zurückgelegt hat ist die Mittellage **(ML.1)** erreicht. Ein Weg-Sensor **(S1)** meldet dies der Regelelektronik **(16),** die dann den Befehl gibt, die Zufuhr des Hydraulikfluids durch ein Sperrventil **(V1)** zu stoppen. In diesem Moment befindet sich der Kolben **2 (KO.2)** in seinem oberen Totpunkt **(OT.2)** weil das Gehäuse des Druckzylinders **2 (DZ.2)** mit der Kraft des negativen Vertikalvectors **(VG)** belastet ist,der bei einem vierrädrigen Fahrzeug, je nach Achslastverteilung ca. 25% des Fahrzeuggewichtes entspricht. Das Ventil **(V1.2)** wird geöffnet und Hydraulikfluid in die Druckkammer **4 (DK.4)** gepresst. Der Druckkolben **2 (KO.2)** wird nach unten gedrückt bis zur Mittellage **(ML.2).** Wenn er dort ist,ist der Kolbenabstand **(A)** erreicht,der der Arbeitsposition der beiden Druckkolben **1 (KO.1)** und **2 (KO.2)** entspricht.

Hierbei ist jedoch die tatsächliche Bewegung nicht ein nach unten Gehen des Kolbens **2 (DKO.2)**,da dieser wegen des Gegendrucks des Kolbens **1 (DKO.1)** bei ausreichendem Hydraulikdruck sich nicht in diese Richtung bewegen kann und dabei das Gehäuse des Druckzylinders **1 (DZ.1)** sich über das Gelenk **(4a)** mit der Radaufhängung **(4)** und dem Fahrzeugrad **(1)** gegen die Fahrbahn abstützt.Sofern die hydraulische Druckkraft in der Druckkammer **1 (DK.1)** mit dem negativen Kraftvector **(VG)** identisch ist, ist die tatsächliche Bewegungsrichtung (Hub) durch den Kolben **2 (KO.2)** der Weg **(Y1)** in der Vertikalen nach oben,wodurch das Gehäuse des Federungselementes **(2)** angehoben wird und mithin über die Federbein-Aufhängung **(3a)** die Karosserie **(3)** in der Vertikalen um den Weg **(Y1)** anhebt.

Die beschriebenen Funktionen können nicht nur nacheinander sondern bevorzugt auch gleichzeitig durchgeführt werden um die Schnelligkeit der Arbeitsbereitschaft zu erhöhen.Bei entsprechender Ausgestaltung des Hydrauliksystems mit geeigneten Sitzventilen ist dies nicht bei jedem Fahrtantritt notwendig, da die Hydraulik diese Druckgrundposition beibehalten kann.Dies ist bekannter Stand der Technik und wird nicht näher dargestellt.

Die beiden Druckkolben **1 (KO.1)** und **2 (KO.2)** haben nun den Arbeitsabstand **(A)** und beide befinden sich in ihrer jeweiligen Mittellage **(ML.1)** und **(ML.2)**.Auch der Aktuator **(11)** befindet sich in seiner Mittellage **(ML3)** und hat zweckmäßigerweise die gleichen positiven und negativen Hubhöhen **(X1+X2/Y1+Y2)** wie die Druckkolben **1 (KO. 1)** und **2 (KO.2)**

In diesem Zusammenhang wird darauf hingewiesen, daß jede mechanische oder hydraulische Krafteinwirkung auf einen der beiden Druckkolben **(KO.1/KO.2)** und jede positive oder negative Beschleunigung und zurückgelegter Weg genauso auf den jeweils anderen Druckkolben **(KO.1 /KO.2)** und den Aktuator **(11)** einwirkt, da alle drei Bauteile durch die Kolbenstangen **(6.1/6.2)** mechanisch fest miteinander verbunden sind. In der weiteren Beschreibung der Ausführungsbeispiele wird dies nicht explizit ausgeführt,sondern als bekannt vorausgesetzt.

Den Verfahrweg und die jeweiligen Positionen von den beiden Druckkolben **1 (KO.1)** und **2 (K.2)** sowie dem bewegungskongruenten Aktuator **(11)** überwachen ständig mindestens ein geigneter Sensor, der bevorzugt ein elektronischer Wegsensor **(WS)** ist, der ständig die aktuelle Position der beiden Druckkolben **(KO.1/KO.2)** zwischen dem jeweiligen oberen und unteren Totpunkt **(OT/UT)** registriert und der Regelelektronik **(16)** meldet.

Nachfolgend die Beschreibung der Funktionsweise des neuartigen Federungselementes **(2)** mit den erfindungsgemäßen Funktionen Federung,Stoßdämpfung,aktive Fahrwerksbeeinflussung und gleichzeitige Stromerzeugung durch den integrierten Lineargenerator **(7)** im Ausführungsbeispiel **Fig.3** als sogenanntes "Federbein".

Sofern es aus bestimmten Gründen zweckmäßig ist,können die verschiedenen erfindungsgemäßen Funktionen auch in technisch unterschiedlichen Kombinationen durch von einander getrennten Bauteilen realisiert werden.

Zum Beispiel wenn der Lineargenerator **(7)** leistungsmäßig stärker ausgeführt werden soll und dabei ein grösseres Volumen und Gewicht aufweist oder wenn mehrere, mindestens zwei Fahrzeugräder **(1)** ihre kinetischen Energie auf einen gemeinsamen Lineargenerator **(7)** abgeben sollen.Oder wenn statt eines Lineargenerators **(7)** mindestens ein Rotationsgenerator **(29)** verwendet wird der von mindestens einem Hydromotor **(33)** angetrieben wird, der in der Karosserie eingebaut ist.

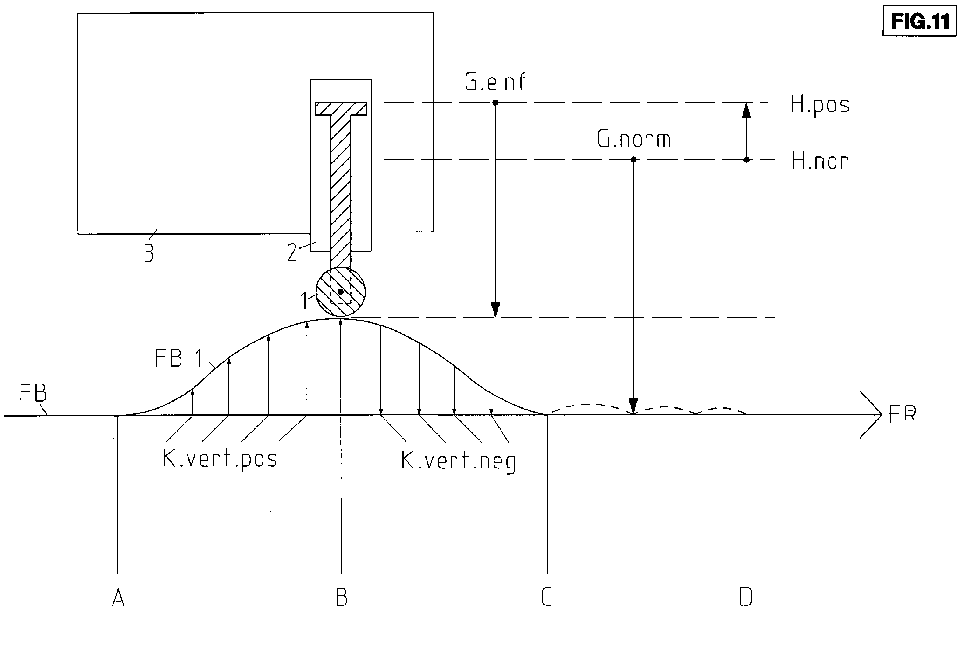

Beim Fahren des Fahrzeuges wird durch beispielsweise eine Straßenunebenheit das Fahrzeugrad **(1)** in der Vertikalen um einen positiven Weg **(W.vert)** nach oben bewegt. **(****Fig.11****)**

Diese Bewegung ist eine Krafteinwirkung und damit kinetische Energie, die eine Resultierende der auf die Fahrzeugkarosserie wirkenden Erdgravitation darstellt. Der vertikale Weg **(W.vert),in** der Zeichnung **Fig.11** symbolisiert im Teil des Vektors **(VB) (****Fig.3****)** als positive Vertikalbeschleunigung des Fahrzeugrades **(1),** wird über die Radaufhängung **(4)** auf das Federungselement **(2)** übertragen und wirkt dabei mit der ausgeübten positiven vertikalen Kraft **(K.vert.pos)** auf das Druckzylindergehäuse **(DZ.1)** und das in der Hydraulik-Druckkammer **(DK.1)** befindliche Hydraulikfluid ein.Die Kraft **(K.vert.pos)** in **Fig.11** wirkt bei mindestens gleich hohem Gegendruck in der Druckkammer 1 **(DK.2)** des Druckzylinders **1 (DZ.1)** durch das Hydraulikfluid auf den Druckkolben **1 (KO.1)** und wird von diesem auf die Kolbenstangen **(6.1)** und **(6.2)** und den Druckkolben **2 (KO.2)** übertragen.Da der Druckzlinder **1 (DZ.1)** über ein druckdichtes Lager **(11a)** mechanisch vertikal verschiebbar gelagert ist gegenüber dem äußeren Gehäuse des Federungselementes **(2),** wird der Druckzylinder **1 (DZ.1)** von der einwirkenden Federungsbewegung der Radaufhängung **(4)** vertikal nach oben bewegt. **(X2** in **Fig.3****)**

Da die Druckkammer **2 (DK.2)** über das Gehäuse des Druckzylinders **2 (DZ.2)** mechanisch über das Federbeingehäuse **(2)** und das Lager **(3a)** mit der Karosserie **(3)** des Fahrzeuges fest verbunden ist,wirkt hier eine negative vertikale Gegenkraft, je nach Achslastverteilung,mit etwa 25 % des Fahrzeuggewichtes ein, die in der Zeichnung **Fig.3** als Vector **(VG)** symbolisiert ist.

Sofern die Druckkammer **4 (DK.4)** drucklos ist oder eine elektronisch geregelte,geringere Druckkraft auf den Druckkolben **2 (KO.2)** ausgeübt wird, als die positivvertikal wirkende Kraft **(K.vert.pos)** bewegt sich logischerweise der Druckkolben **2 (KO.2)** nach oben in Richtung **(Y1)** zu seinem oberen Totpunkt **(OT.2).** Diese Bewegung führt gleichzeitig der an den Kolbenstangen **(6.1)** und **(6.2)** fest montierte Aktuator **(11)** des Lineargenerators **(7)** aus und bewegt sich somit im Magnetfeld des Stators **(8)**,wodurch gemäß den bekannten physikalischen Gesetzen Strom induziert wird,der weitergeleitet, verarbeitet und zumindest teilweise bis zur Verwendung in einem Akku zwischengespeichert wird.

Diese Bewegung des Aktuators **(11)** im Magnetfeld des Stators **(8)** verursacht bekanntlich entsprechend den physikalischen Gesetzen eine Gegenkraft **(K.mag)** gegen die Bewegungsrichtung des Aktuators **(11).** Diese Gegenkraft **(K.mag)** ist proportional der Magnetfeldstärke und bewirkt im Prinzip die gleiche Funktion,wie sie die üblichen Hydraulikstoßdämpfer und die zugehörige Spiralfeder aufweisen. Darüber hinaus kann auch die Stärke der Dämpfungswirkung jederzeit beliebig durch die Regelelektronik **(16)** verändert werden indem beispielsweise die magnetische Feldstärke des Stators **(8)** und/oder ggfs. Aktuators **(11)** variiert wird durch elektronisch geregelte Veränderung der Stromstärke/ Stromamplitude und damit Magnetfeldstärke im Stator **(8)** oder gegebenenfalls im Aktuator **(11),** sofern dieser kein Permanentmagnet ist sondern das Magnetfeld mit einer stromdurchflossenen Spule herstellt.Dies ist bekannter Stand der Technik, weshalb keine detaillierte Beschreibung erforderlich ist.

Mindestens ein Drucksensor **(DS)** je Druckkammer **(DK.x)** liefert die nötigen Informationen an die Regelelektronik **(16).**Mindestens ein Wegsensor **(WS)** überwacht ständig die Positionen der Druckkolben **1 (DK.1)** und **2 (DK.2)** und meldet diese der Regelelektronik **(16),** die diese Parameter für die Schaltalgorithmen der Pneumatikventile verwendet.

Falls die magnetische Dämpfungswirkung durch die magnetische Gegenkraft **(K.mag)** nicht ausreichen sollte,kann kurz vor Erreichen des oberen Totpunktes **(OT.2)** oder schon vorher in jeder beliebigen anderen Position durch die Regelelektronik **(16)** die Stromstärke/Stromamplitude des durch den Stator **(8)** fließenden Stromes erhöht werden, wodurch das Magnetfeld verstärkt und kongruent dazu die magnetische Gegenkraft **(K.mag)** vergrößert wird und/ oder durch Zufuhr von Hydraulikfluid über die Hydraulikleitung **(9.2b)** die positive Vertikalbewegung **(Y1)** des Druckkolbens **(KO.2)** abgebremst, also gedämpft und letztlich gestoppt werden, wobei auch dies über geeignet ausgelegte Drosselventile sehr schnell und feinfühlig von der Regelelektronik / Microprozessor **(16)** variiert und dosiert werden kann.

Desgleichen bei Bewegung der Druckkolben **1** und **(KO.1)** und **2 (KO.2)** sowie dem Aktuator **(11)** in der Gegenrichtung, der negativen Vertikalbewegung. Hier kann ebenfalls die Regelelektronik **(16)** die Stromstärke/Stromamplitude und damit die magnetische Feldstärke und damit die magnetische Gegenkraft **(K.mag.)** bedarfsgerecht elektronisch variieren.Zusätzlich kann im Bedarfsfall die Dämpfungswirkung bei der Bewegung des Druckkolbens **2 (KO.2)** eine dosierte Gegenkraft durch variierbaren Hydraulikdruck aufgebaut werden durch Zuleitung von Hydraulikfluid in die Druckkammer **3 (DK-3)** des Druckzylinders **1 (DZ-1).** Diese Maßnahmen sollten aber nur in Ausnahmen aktiviert werden,da dies prinzipiell der technischen Funktion der üblichen Hydraulik-Stoßdämpfer entspricht und dementsprechend Energie nutzlos vernichtet wird, da sie damit nicht im Lineargenerator **(7)** in Strom umgewandelt wird.

Durch die Regelelektronik **(16)** gesteuert,realisieren die Druckkammern **1 (DK.1)** und **2 (DK.2)** des Druckzylinders **1 (DZ.1)** im wesentlichen die Funktionen des "aktiven Fahrwerkes", während der Druckzylinder **2 (DZ.2)** mit seinen Druckkammern **3 (DK.3)** und **4 (DK.4)** im Zusammenwirken mit dem Lineargenerator **(7)** in der Hauptsache die Federungs-und Dämpfungsfunktionen des Systems erfüllen bei gleichzeitiger Stromherstellung.

Die vertikalen oszillierenden Bewegungen des Aktuators **(11)** im Magnetfeld des Stators **(8)** bewirken bei geeigneter physikalischer Auslegung und Dimensionierung eine magnetische Gegenkraft **(K.mag)** zur jeweiligen Bewegungsrichtung,die im Prinzip die gleiche Wirkung und Funktion hat wie die üblichen Federungskomponenten Spiralfeder und Stoßdämpfer beim Ein-und Ausfedern der Fahrzeugräder **(1).** Die Druckkammer **4 (DK.4)** trägt das anteilige Gewicht.

Beim Einfedern des Fahrzeugrades **(1)** bewegt sich der Druckkolben **2 (KO.2)** vertikal von seiner Mittellage **(ML.2)** in Richtung zum Oberen Totpunkt **(OT.2).Dieser** Bewegungsrichtung (Kraftvector **VB**) wirkt die vom Aktuator **(11)** induzierte magnetische Gegenkraft **(K.mag)** der jeweiligen Bewegungsrichtung des Aktuators **(11)** entgegen.

Sobald der Druckkolben **2 (KO.2)** den Oberen Totpunkt **(OT.2)** erreicht oder wenn die Einfederkraft **(W.vert. pos)** vorher von der dieser entgegenwirkenden magnetischen Gegenkraft **(K.mag)** des Aktuators **(11)** kompensiert wurde und dadurch der Druckkolben **2 (DK.2)** schon vor dem Oberen Totpunkt **(OT.2)** gestoppt wird, muß der Druckkolben **2 (KO.2)** wieder zurückkommen in seine Position Mittellage **(ML.2)** um wieder eine neue,ausreichende Federbewegung durchführen zu können.**(****Fig.11** **B/C).** Dies geschieht dadurch, daß die Regelelektronik **(16)** von mindestens einem geeigneten Sensor, beispielsweise einem Druck,- oder bevorzugt Wegsensor **(WS)** die Information erhält, daß der Druckkolben **2 (KO.2)** angehalten wurde und seinen Umkehrpunkt erreicht hat.Dann wird ein Hydraulikventil geöffnet, wodurch das Hydraulikfluid in die Druckkammer **2 (DK.2)** eingespeist wird, wodurch der Druckkolben **2 (KO.2)** in die negative Vertikalrichtung **(Y.2)** abwärts bewegt wird.

Gleichzeitig wird die Druckkammer **3 (DK.3)** durch öffnen eines Hydraulikfluid-Abflussventiles weitgehend drucklos gemacht. Dies und die Druckzufuhr zur Druckkammer **4 (DK.4)** bewegt das Fahrzeugrad **(1)** und damit den Druckkolben **2 (DK.2)** abwärts bis zu seiner Mittellage **(ML.2).** Sobald diese erreicht ist,was der Mittellagen-Sensor **(S.1)** der Regelelektronik **(16)** mitteilt, wird der Druckkolben **2 (DK.2)** in dieser Position gestoppt durch Stopp der Hydraulikfluid-Zufuhr in die Druckkammer **4 (DK.4).** Diese muß nun soviel Druck aufgebaut halten,wie dem Vector Karosserie-Gewicht **(VG)** entspricht und dieses Gewicht tragen.

Gleichzeitig wird die Druckkammer **3 (DK.3)** drucklos gehalten für schnelle Reaktionen bei Ausfederbewegungen des Fahrzeug-Rades **(1).** Falls ein weiterer Sensor,bevorzugt ein Drucksensor **(DS.x)** feststellt, daß das Rad **(1)** noch weiter ausfedern muß um festen Kontakt zur Fahrbahn zu haben, kann diese Ausfederbewegung noch weiter durchgeführt werden,bis der Druckkolben **2 (DK-2)** zum Unteren Totpunkt **(UT.2)** gelangt.

Auch bei dieser Abwärtsbewegung des Druckkolbens **2 (KO.2)** ist der Aktuator **(11)** einerseits stromerzeugend tätig und andererseits mit seiner magnetischen induzierten Gegenkraft **(K.mag)** stoßdämpfend wirksam.Falls der Druckkolben **2 (KO.2)** seinen Unteren Totpunkt **(UT.2)** erreicht, und eine noch weitere Ausfederung des Fahrzeug-Rades **(1)** erforderlich sein sollte, kann ergänzend die Druckkammer **(DK.2)** des Druckzylinders **1 (DZ.1)** im Druck verringert oder drucklos gemacht werden. Gleichzeitig kann der Druck in der Druckkammer **1 (DK.1)** erhöht werden.Damit steht zusätzlich der Weg **(X.2)** zum Ausfedern des Fahrzeugrades **(1)** zur Verfügung.

Hierbei ist aber keine Stromgewinnung des Lineargenerators **(7)** gegeben.Die Funktionen beim Zurückfedern (Einfederung) sind sinngleich in umgekehrter Reihenfolge.

Gleichzeitig realisiert die Hydraulik die Federwirkung der üblichen Stahlfeder in der Fahrzeug-Radaufhängung **(4)** das heißt, den Ausgleich der statischen Belastung durch das Fahrzeuggewicht (negativ-vertikaler Vector **VG)** indem der Druck (Krafteinwirkung) in den Hydraulikkammern **1 (DK.1)** bis **4 (DK.4)** jeweils mindestens genauso groß ist wie das Gewicht,das je Fahrzeugrad **(1)** anfällt.

Aus der **Fig.3** ist ersichtlich,daß die konstruktiven Komponenten Duckzylinder **1 (DZ.1)** mit Druckkolben **1 (KO.1),** Kolbenstangen **(6.1/6.2)** und Druckzylinder **2 (DZ.2)** mit Druckkolben **2 (KO.2)** in ihrem erfindungsgemäßen Zusammenwirken die Trag-und Federungsfunktionen der bislang üblichen Stahlfedern übernehmen und zusätzlich durch die Algorithmen der Regelelektronik / Microprozessor **(16)** weitere Optionen ermöglichen im Sinne eines sogenannten "aktiven Fahrwerkes". Diese Funktionen sind Stand der Technik,jedoch ohne die neuartige erfindungsgemäße technische Möglichkeit, der gleichzeitigen Stromerzeugung durch integrierte oder alternativ externe, räumlich getrennte, hydraulisch oder mechanisch gekoppelte Stromgeneratoren,die sich auch im Inneren oder an der Außenseite der Karosserie befinden können, die wie beschrieben,geeignet ausgelegte,gekoppelte LinearGeneratoren **(7)** sein können oder aber alternativ mindestens ein Rotations-Generator **(29)** sein kann, der mechanisch, pneumatisch oder bevorzugt hydraulisch von einem Hydromotor **(33)** angetrieben wird und somit Elektrizität produziert.

Eine Niveauregulierung läßt sich ebenfalls jederzeit problemlos durch entsprechende Programmierung der Regelelektronik **(16)** realisieren. Dies geschieht durch Veränderung des Arbeitsabstandes **(A)** der Druckkolben (KO.1) und **(KO.2)** und zwar jeweils für die beiden Räder einer Fahrzeugachse. Wenn am Fahrzeug beispielsweise an der Hinterachse eine stärkere Belastung durch Beladung vorgenommen wird verringert sich der Arbeitsabstand **(A)** um die Belastungsänderung durch die Zuladungskraft **(b).** Durch Druckerhöhung in der Druckkammer **1 (DK.1)** und/oder Druckverminderung in der Druckkammer **2 (DK.2)** und/oder alternativ Druckerhöhung in der Druckkammer **4 (DK.4)** und/oder Druckminderung in der Druckkammer **3 (DK.3)** wird der Abstand **(B)** wieder mit dem Abstand **(A)** kongruent gemacht und so das gleiche Niveau wieder erreicht.

Weiterhin besteht auch die Möglichkeit,zum Beispiel bei Autobahnfahrten die Karosserie im Höhenabstand zur Fahrbahnoberfläche abzusenken, indem der Druckkolbenabstand **(X1)** elektronisch geregelt,bevorzugt geschwindigkeitsabhängig verringert wird.

Dies hat den Vorteil, daß damit der Fahrzeug-Schwerpunkt niedriger liegt und dadurch die Straßenlage des Fahrzeuges verbessert wird. Außerdem vermindert dies im Zusammenwirken mit bestimmten aerodynamischen Maßnahmen den Luftwiderstand das heißt, den **"cw-Wert"** und den davon beeinflussten Energieverbrauch.

Eine weitere optimale Möglichkeit ist die Kompensation von Fliehkräften bei Kurvenfahrt durch Höhenveränderungen der Karosserie von den beiden kurvenäußeren zu den kurveninneren Rädern indem beispielsweise bei den Federbeinen **(2)** der kurveninneren Radaufhängungen **(4)** der Arbeitsabstand der Druckkolben **(X1/X2)** proportional zur Geschwindigkeit bzw der wirksamen Fliehkraft variabel verringert wird und/oder bei den Federbeine **(2)** der kurvenäußeren Radaufhängungen **(4)** der Arbeitsabstand der Druckkolben **(X1/X2)** proportional zur Geschwindigkeit bzw der wirksamen Fliehkraft variabel vergrößert wird.

Weitere Funktionen sind der Ausgleich von Wank- und Nickbewegungen der Karosserie durch entsprechende sinngleiche elektronisch geregelte Federbeinaktivitäten,die die Regelelektronik **(16)** durch entsprechende Programmierungs-Algorithmen und Steuerungsbefehle aktivieren kann.

Diese grundsätzlichen Funktionsabläufe sind Stand der Technik,besonders bei ähnlichen Konstruktionen der bekannten aktiven hydropneumatischen Fahrwerksysteme.

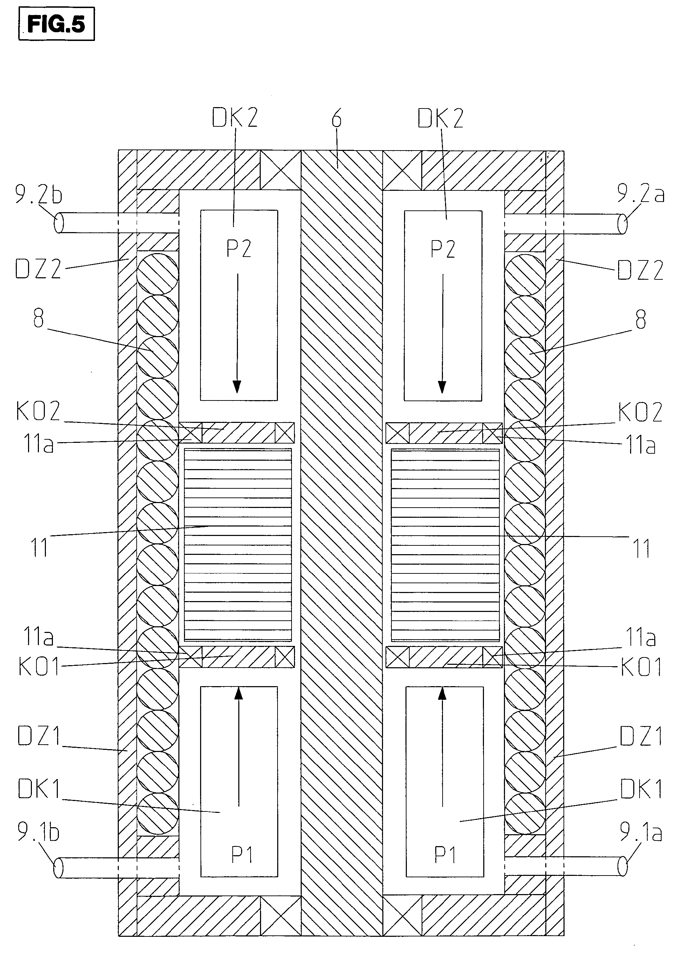

In **Fig.5** wird eine weitere bevorzugte Variante als Ausführungsbeispiel dargestellt. Diese Konstruktion zeichnet sich durch besonders kompakte Bauweise aus,weil der Aktuator **(11)** durch seine besondere Konstruktion gleichzeitig die Funktion der Druckkolben **1** und **2 (KO.1/KO.2)** übernimmt. Wie in **Fig.5** ersichtlich,bilden die Druckkolben **1** und **2 (KO.1/KO.2)** zusammen mit dem Aktuator **(11)** ein gemeinsames Bauteil.

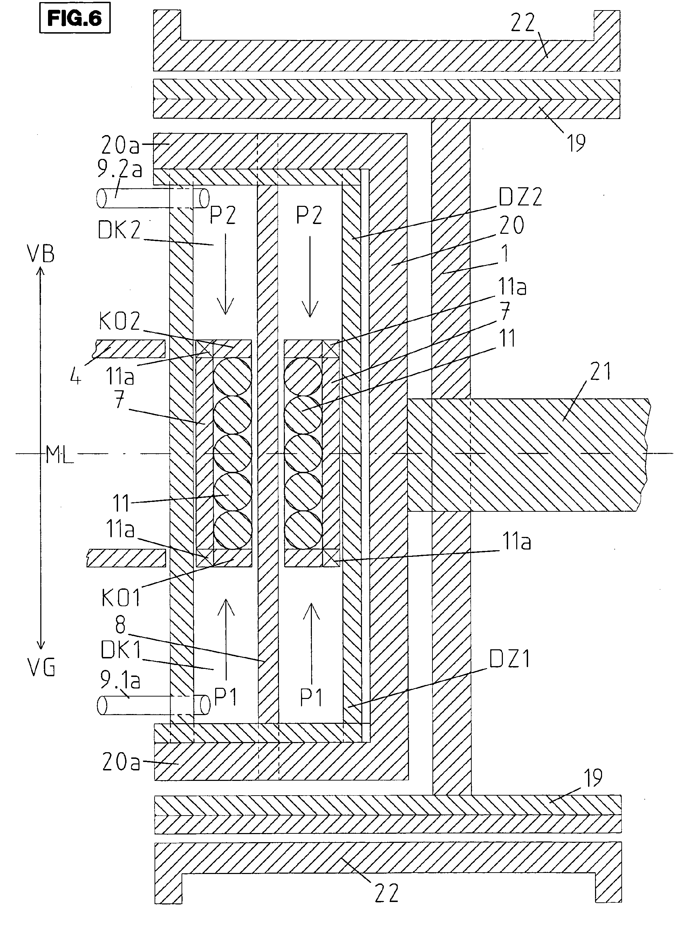

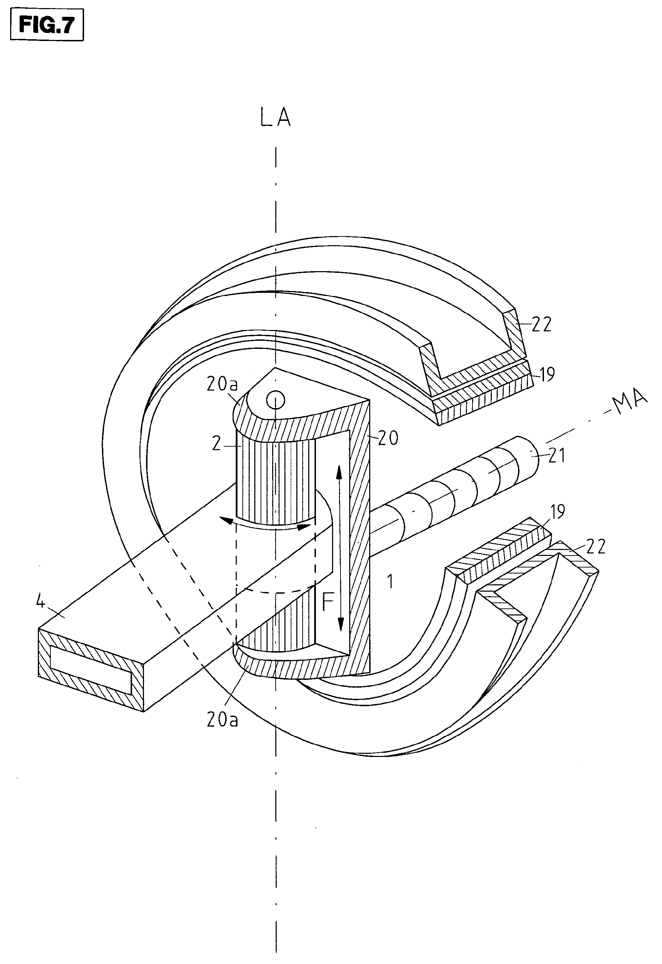

Durch diese kompakte Bauweise besteht unter anderem die vorteilhafte Möglichkeit, das Federungs-und Stoßdämpferelement **(2)** mit integriertem Lineargenerator **(7)** im Bereich des inneren Hohlraumes der Fahrzeugrad- Felge **(22)** zu montieren,wie in **Fig.6** und **7** beispielhaft dargestellt

**Fig.6** ist ein mittiger vertikaler Teilschnitt und **Fig. 7** eine vereinfachte perspektivische teilgeschnittene Ansicht eines Fahrzeugrades **(1)** mit Federungselement **(2)**.Aufbau und Funktion in dieser variierten Version des weiteren Ausführungsbeispiels sind analog zu den obigen Ausführungen, wobei Unterschiede im wesentlichen in **Fig.5** und **Fig.6** dargestellt sind wie folgt:

Im bevorzugt zylinderförmigen Gehäuse des Federungselementes **(2)** ist ein hohlzylinderförmiger Stator **(8)** eingebaut.Im Innenhohlraum des hohlzylinderförmigen Stators **(8)** ist eine glattflächige zylinderartige Innenwandung **(23)** angeordnet,die aus einem Material besteht, das für magnetische Felder durchlässig ist. Im Innenhohlraum des zylinderförmigen Stators **(8)** befindet sich der ebenfalls zylinderförmig ausgebildete Aktuator **(11),** der einen zylinderförmigen Innenhohlraum aufweist, durch den die runde Aktuatorführungsstange **(11b)** geführt ist, die mit ihrem unteren und oberen Ende in den jeweiligen Lagern **(11c)** befestigt ist, dieTeile der Druckzylinder **1 (DZ.1)** und **2 (DZ.2)** sind.

Am unteren Ende des Aktuators **(11)** ist mit diesem mechanisch fest verbunden, der Druckkolben **1 (KO.1)** und am oberen Ende,ebenfalls mechanisch fest verbunden,der Druckkolben **2 (KO.2)** angeordnet. Beide Druckkolben **1** und **2 (KO.1/KO.2)** tragen an ihren Innen- und Außenradien mindestens je einen Dichtring **(11a)**,der eine präzise Führung und Druckabdichtung gegenüber der Innen-Gleitwandung **(23)** des Stators **(8)** und der zylinderförmigen Außenfläche der Aktuatorführung **(11b)** gewährleistet. Da der Aktuator **(11)** wie in der **Fig.6** auf Anhieb ersichtlich, in seiner Höhendimension deutlich kürzer ist als der Innenzylinderraum des Stators **(8)**, wird dadurch unter dem Druckkolben **1 (KO.1)** die Druckkammer **1 (DK.1)** und über dem Druckkolben **2 (KO.2)** die Druckkammer **2 (DK.2)** gebildet.In diese führen an geeigneter Stelle die zugehörigen Hydraulikleitungen **(9.1a/ 9.1b** und **9.2a/9.2b)**

Bei entsprechender Hydraulikfluidzufuhr in die beiden Druckkammmern **1** und **2 (DK.1/DK.2)** mit elektronisch geregeltem Druckwechsel gleiten die beiden Druckkolben 1 und **2 (KO.1/KO.2)** zusammen mit dem mechanisch fest gekoppelten Aktuator **(11)** auf und ab,wobei dieser in bekannter Weise durch Induktion Strom erzeugt. Die sonstigen Funktionen ergeben sich sinngleich aus den oben beschriebenen Eigenschaften und Funktionen der anderen Varianten.

**Fig.5** und **Fig.6** zeigen eine weitere Variation als bevorzugtes Ausführungsbeispiel. Eine Abwandlung der in **Fig.3** gezeigten Versionen ist möglich, indem die Druckzylinder **1 (DZ.1)** und **2 (DZ.2)** ohne den in einem separaten Gehäuse befindlichen Lineargenerator **(7)** ausgeführt werden und nur die oben beschriebenen hydraulischen Funktionen zur Federung, Dämpfung, aktives Fahrwerk usw ausüben.

Der mindestens eine Lineargenerator **(7)** wird dabei in geeigneter Position an,unter oder in die Karosserie **(3)** verlegt und über Hydraulikleitungen **(9ff)** mit den mindestens zwei Druckzylindern **1** und **2 (DZ.1/DZ.2)** je Fahrzeugrad **(1)** energetisch (hydraulisch) gekoppelt.

Die beiden Druckkolben **1** und **2 (KO.1/KO.2)** bilden dabei ein gemeinsames Bauteil,das die beiden Druckkammern **(DK.1)** und **(DK.2)** trennt. Diese Variante bringt den Vorteil,dass bei gleichem Abstand vom oberen und unteren Halterungsschenkel **(20a)** (Fig.6) (Gesamtlänge der Aktuatorführung) sich durch den Wegfall des Aktuators **(11)** eine niedrigere Bauhöhe der Kolbeneinheit **(KO.1/KO.2)** und damit ein größerer Hub (Federweg) und geringeres Gewicht ergibt.

Das anteilige Fahrzeuggewicht **(VG)** wird hier durch die von der Hydraulikpumpe **(P.1)** über die Hydraulikleitung **(9.1a)** und einem Einweg-Sperrventil **(14)** mit Hydraulikfluid gefüllten Druckkammer **1 (DK.1)** und dem dort vorhandenen,gleich hohen Gegendruck **(Vp.1)** aufgenommen und ständig durch den Drucksensor **(DS.1)** überwacht. Siehe **Fig.4** Beispiel hydraulisch-elektronisches Schaltbild

Bei einer Einfederbewegung **(VB)** des Fahrzeugrades **(1)** vertikal nach oben erhöht sich der hydraulische Druck **(K.hydr)** in der Druckkammer **(DK.1).** Dies registriert der Drucksensor **(DS.1)** und bei Überschreiten eines Grenzwertes gibt die Regelelektronik **(16)** ein Regelventil **(12a)** in der Hydraulikleitung **(9.1b)** frei,das zuerst zu einem hydro-pneumatischen Hochdruckspeicher **(15)** führt und von dort durch Hyddraulikleitungen **(9.x)** mit dem Lineargenerator **(7)** verbunden ist,der bevorzugtin der zu **Fig.5** beschriebenen Bauart ausgeführt ist.

Die Freigabe des Regelventiles **(12a)** führt einerseits zu einem Druckabbau in der Druckkammer **1 (DK.1)** und andererseits wird das Hydraulikfluid über ein Einwege-Sperrventil **(14)** in mindestens einen hydropneumatischen Hochdruckspeicher **(15)** geleitet und dort unter dem entsprechenden Druck zwischengespeichert.Oder bevorzugt über die Bypassleitung **(9c)** in die Druckkammer **2 (DK.2)** geführt.

Der Druckabbau in der Druckkammer **1 (DK.1)** geschieht nur bis zum unteren Druckgrenzwert, der dem anteiligen Fahrzeuggewicht **(VG)** entspricht bis der Ausgleich der äquivalenten hydraulischen Gegenkraft **(K.hydr)** erreicht ist und die Mittellage **(ML.2)** der Kolben **1** und **2 (KO.1/KO.2)** wieder hergestellt ist.

Der mindestens eine hydropneumatische Hochdruckspeicher **(15)** kann für jedes Fahrzeugrad **(1)** einzeln vorgesehen werden oder alternativ kann dieser auch für mehrere Fahrzeugräder **(1)** das heißt, deren hydraulischen Feder-und Dämpferelemente **(5)** ausgelegt sein und verwendet werden.

Von diesem hydropneumatischen Hochdruckspeicher **(15)** führt die Hydraulikleitung **(9.1b)** über ein weiteres Regelventil **(12b)** und mindestens einem Druckverstärker **(34)** zu dem mindestens einen Lineargenerator **(7)** der beispielsweise bevorzugt in der zu **Fig.5** dargestellten Bauart ausgeführt ist,oder alternativ zu mindestens einem Hydromotor **(33),** der mindestens einen Rotationsgenerator antreibt,wobei durch ein elektronisch geregeltes Wechselventil **(12b)** über die Hydraulikleitungen **(9.1a)** und **(9.1b)** aus dem hydropneumatischen Hochdruckspeicher **(15)** unter hohem Druck stehendes Hydraulikfluid den Hydraulikkammern **1** und **2 (DK.1/ DK.2)** im Lineargenerator **(7)** abwechselnd zugeführt wird, wodurch die Kolben **1** und **2 (KO.1/KO.2)** hochfrequent hin-und herbewegt werden,was sodann in bekannter Weise durch den gekoppelten Aktuator **(11)** zur induktiven Stromherstellung führt, der in einem geeigneten Speichermedium (Akku/Kondensator) zwischengespeichert wird. Über die Hydraulikableitungen **(9.2a)** und **(9.2b)** wird das überschüssige Hydraulikfluid in das Hydraulikreservoir **(13)** zurückgeleitet.

Weitere Vorteile dieses Ausführungsbeispieles sind: Es kann die kinetische Energie von mindestens zwei oder mehr Fahrzeugrädern **(1)** auf nur einen Lineargenerator **(7)** einwirken, was Leistungs-und Kostenvorteile bringt.

Außerdem werden die ungefederten Massen in den FahrzeugRädern **(1)** verringert und der Lineargenerator **(7)** kann grösser dimensioniert sein und daher mehr Leistung abgeben, also mehr Strom generieren.

Alternativ kann bei dieser Konstruktion statt des mindestens einen Lineargenerators **(7)** auch mindestens ein Rotationsgenerator eingesetzt werden, der von mindestens einem Hydromotor **(33)** angetrieben wird, der die benötigte Hydro-Energie das heißt hydraulischer Druck, von den Druckzylindern **1** und **2 (DZ.1/DZ.2)** aus den Komponenten von kinetischer und Gravitationsenergie der Relativ-Bewegungen von Karosserie und mindestens einem Fahrzeugrad **(1)** generiert.

Alternativ kann statt Hydraulikfluid eventuell teilweise ein Pneumatiksystem mit gasförmigen Druckmedien verwandt werden und/oder zumindest teilweise mechanische Übertragungselemente eingesetzt werden oder beliebig variiert,geeignete Systemkombinationen aus Hydraulik, Pneumatik und/oder Mechanik eingesetzt werden.

In **Fig.6** wird ein weiteres variiertes Anwendungsbeispiel dargestellt. Es wird hier ein vertikaler Teilquerschnitt und in **Fig.7** ein perspektivischer Teilschnitt eines Fahrzeugrades **(1)** gezeigt mit einer Radnabe **(21),** einer Radfelge **(22)** mit eingebautem Radnabenmotor **(19)** bekannter Bauart, beispielsweise gemäß Patent GB 2 440 251. (Stand der Technik)

An der Außenseite der Radnabe **(21)** ist wie üblich,die Radfelge **(22)** angeschraubt.Auf der gegenüberliegenden Innenseite der Radnabe **(21)** ist ein geeignet gestalteter und dimensionierter Träger **(20)** montiert,an dessen oberem und unterem Ende je ein bevorzugt winkelig abgekröpfter Halterungs-Schenkel **(20a)** auskragt. Zwischen dem oberen und unteren Halterungsschenkel **(20a)** ist vertikal,in 90 Grad-Position zur Mittelachse der Radnabe **(21)** die Aktuatorführung **(11b)** montiert.Diese kann bei Bedarf auch mit seinem oberen Ende in Richtung Fahrzeugheck um einige beliebige, geeignete Winkelgrade geneigt angeordnet sein zur Verbesserung der Spurführung.

Der Aktuator **(11)** kann wahlweise als geeignet dimensionierter und geformter Permanentmagnet ausgebildet sein oder aus stromdurchflossenen Wicklungen bestehen, die das erforderliche elektromagnetische Feld abgeben.Der Aktuator **(11)** bildet wie zu **Fig 5** beschrieben, zusammen mit den Druckkolben **1 (KO.1)** und **2 (KO.2)** ein mechanisch fest verbundenes Bauteil und ist seinerseits als hohlzylinderförmiger Doppel-Druckkolben **(KO.1/KO.2)** ausgebildet,dessen Funktionen prinzipiell identisch wie in **Fig.5** dargestellt und detailliert beschrieben sind.

Im Gegensatz zu der Version, die zu **Fig.5** beschrieben ist, wird hier der bewegliche Aktuator **(11),** der ebenfalls an seiner Ober-und Unterseite mit je einem Druckkolben **1 (KO.1)** und **2 (KO.2)** versehen ist, über einen stabilen Träger **(4)** mechanisch mit der Fahrzeug-Karosserie **(3)** fest verbunden. Damit erfolgt die Federbewegung des Fahrzeugrades (1) durch die Auf-und Abbewegung der Halterung **(20)** zusammen mit der Aktuatorführung **(11 b)** in der Lagerung **(11c)** und der am Aktuator **(11)** montierten Druckkolben **1 (KO.1)** und **2 (KO.2)**

Wenn der Aktuator **(11)** beispielsweise mit elektrischen Wicklungen ausgeführt wird, kann die Aktuatorführung **(11b)** aus einem geeigneten magnetisierten Material hergestellt sein,und somit als Permanetmagnet ein magnetisches Feld abgeben.Alternativ kann auch der Stator **(8)** wie in **Fig.5** gezeigt,den Aktuator **(11)** radial als hohlzylinderförmiges Bauteil mit Spulenfunktion umgeben.

Die in der Zeichnung **Fig.6** gezeigten Druckzylinder **1 (DZ.1)** und **2 (DZ.2)** mit ihren Druckkammern **1 (DK.1)** und **2 (DK.2)** funktionieren prinzipiell sinngleich wie bei den oben beschriebenen vorherigen Ausführungsbeispielen, insbesondere zu **Fig.5****.** Der Unterschied und Vorteil bei dieser Ausführung ist,daß hier die Lenkachse **(LA)** des Fahrzeugrades **(1)** mit der Mittelachse der Aktuatorführung **(11b)** zusammenfällt.

Damit besteht auch die Möglichkeit, eine einfache und relativ preiswerte Allradlenkung zu konstruieren. Die Lenkbewegung kann hier konventionell (mechanisch) mit Lenkgestänge oder elektro-motorisch ("steer by wire") ausgeführt werden. Dieses Prinzip ist eine grundsätzlich bekannte Technologie und kann hierbei alternativ eingesetzt werden.

Die oben beschriebenen Ausführungsformen der Erfindung verwenden Komponenten der kinetischen Energie und Gravitation aus den verikalen Relativ-Bewegungen zwischen Karosserie **(3)** und Fahrzeugrad **(1)** bei der Federung zur Umwandlung in elektrische Energie.

Eine weitere erfindungsgemäße Möglichkeit zur fahrzeuginternen Energiegewinnung ist die Umwandlung von kinetischen Energie- Komponenten aus positiven und negativen Beschleunigungs- Kräften beispielsweise beim Fahren die vertikalen Karosserie-Bewegungen,beim Bremsen die horizontalen negative Beschleunigungen in Fahrtrichtung und in Kurven die Fliehkräfte, die auf die Karosserie **(3)** einwirken.

Hierzu werden spezielle Lineargeneratoren **(7)** in dem Fahrzeug vorgesehen, deren Wirkachsen (Mittelachsen) sich in der Vertikalen und der Horizontalen befinden, wobei die horizontalen Wirkachsen der Lineargeneratoren **(7)** sich einerseits in der Fahrzeug-Längsrichtung (Fahrtrichtung) befindet und andererseits alternativ in 90-Gradstellung zur Fahrzeug-Längsrichtung angeordnet sind.

Die verwendeten Lineargeneratoren **(7)** sind ähnlich der in **Fig.5** dargestellten Ausführung aufgebaut und können eine beliebige geeignete Länge aufweisen. Die Bauform des Lineargenerators **(7)** und Aktuators **(11)** kann zylindrisch mit runden Querschnitt und geeignetem Durchmesser sein oder ein kubisches Bauteil,das einen rechteckigen, polygonalen oder einen anderen beliebig geformten Querschnitt aufweist.

Die für diesen Zweck vorgesehene Ausführung des Lineargenerators **(7)** hat einen Aktuator **(11),**der beispielsweise durch eine Kugelumlauf-Lagerung auf der Führung **(11b)** sehr leichtgängig beweglich angeordnet ist und durch das Eigengewicht des Aktuators **(11)** den auf ihn einwirkenden Beschleunigungs- und / oder Fliehkräften folgen kann und sich frei schwingend verhält und somit eine Linearbewegung im Magnetfeld des Stators **(8)** ausführt und dadurch Strom produziert.

Eine erhebliche Verbesserung des Wirkungsgrades wird erzielt,wenn der Lineargenerator **(7)** ein druckdichtes Gehäuse hat und im Gehäuseinneren nahezu ein Vakuum herrscht, wodurch die Bewegungen des frei schwingenden Aktuators **(11)** weniger gehemmt werden.

Bei der horizontalen Anbringung des Lineargenerators **(7)** in 90-Gradposition zur Fahrzeug-Längsachse zur Erfassung der (Kurven-) Fliehkräften kann der Aktuator **(11)** frei schwingend zwischen den beiden Endpositionen durch die einwirkenden Fliehkräfte bewegt werden.

Bei der vertikalen Anbringung des Lineargenerators **(7)** sowie bei derjenigen Anbringung in der die Wirkachse mit der Fahrzeug-Längsachse zusammenfällt,muß der frei schwingende Aktuator **(11)** zweckmäßigerweise immer wieder in eine Mittellage **(ML)** gebracht werden, sobald er eine der Endpositionen erreicht hat. Dies kann mechanisch durch geeignet dimensionierte Federn geschehen oder durch magnetische Gegenkräfte von gegenpoligen Permanentmagneten oder von elektrischen Magnetspulen bewirkt werden, die in den beiden Endpositionen an der Aktuatorführung **(11b)** montiert sind, die automatisch bei Erreichen der Endposition aktiviert werden.

Alternativ,aber mit höherem technischen und Kostenaufwand kann dies auch bei elektronischer Regelung pneumatisch oder hydraulisch sinngleich wie oben bei den Radfedersystemen beschrieben, gemacht werden.

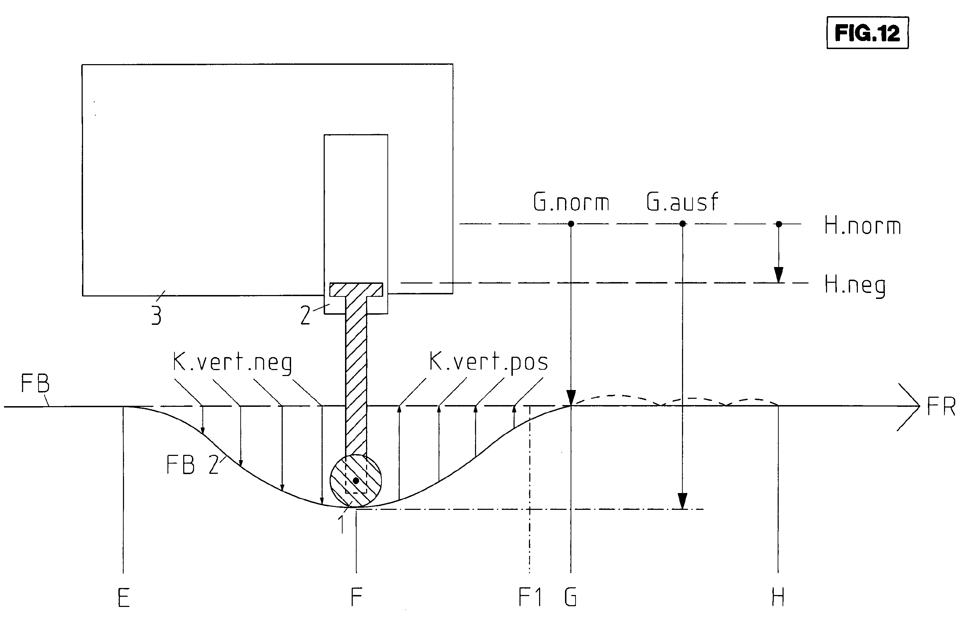

Ergänzend wird zum besseren Verständnis der grundsätzlichen Funktionsweise des oben beschriebenen hydraulischen Federungs-und Dämpfungsungselementes **(2)** bei der Umwandlung von kinetischer Energie aus Komponenten der Gravitation in Elektrizität durch einen integrierten oder mechanisch,alternativ hydraulisch gekoppelten Generator,bevorzugt Lineargenerator **(7)** eine grafische Darstellung in vereinfachter, unmaßstäblicher Form als **Fig. 11** und **Fig.12** gezeigt und die prinzipielle Funktion wie folgt näher beschrieben.

Diese Erfindung setzt ein neuartiges Fahrzeug-Federungs-und Dämpfungssystem ein, das keine der bisher üblichen energievernichtenden Elemente (Stahlfeder oder Luftbalg und Hydraulik-Stossdämpfer) verwendet, sondern bevorzugt ein spezielles,erfindungsgemäßes hydraulisches Federungs-und Dämpfungselement, das mit einem im separaten Gehäuse befindlichen, geeigneten Stromgenerator, bevorzugt einem Lineargenerator **(7)** mechanisch oder hydraulisch gekoppelt oder als gemeinsame Baueinheit kombiniert ist.

Um Irrtümern vorzubeugen wird darauf hingewiesen,daß diese Technologie selbstverständlich kein "Perpetuum Mobile" darstellt oder gar eine direkte Umwandlung von Gravitation in Elektrizität sein soll. Denn die zur Stromherstellung benötigte Energie wird bei der Fahrt ständig in ausreichender Menge extern zugeführt in Form der bislang ungenutzten kinetischen Energie der Fahrzeugrad-Federbewegungen, die in Strom umgewandelt wird.Wobei diese kinetische Energie eine Resultierende des Fahrzeuggewichtes ist,das bekanntlich durch die Erd-Gravitation verursacht wird.

Insoweit ist diese neuartige erfindungsgemäße Technologie durchaus eine indirekte Umwandlung von Komponenten der Gravitationskräfte die sich im Fahrzeuggewicht physikalisch realisieren, in Elektrizität mit Hilfe der vom Lineargenerator **(7)** aufgenommenen kinetischen Energie aus den bislang ungenutzten Rad-Federbewegungen.

Zwar entfallen dabei die konventionellen Stahlfedern oder die Luftbälge samt Hydraulik-Stoßdämpfer. Deren bekannten technischen Funktionen inclusive Niveauregulierung und "aktives Fahrwerk" bleiben aber erhalten. Das Federungs-und Dämpfungselement **(2)** mit integriertem Stromgenerator **(7)** wandelt damit kinetische Energien der federnden Fahrzeugräder **(1)** die Komponenten des Fahrzeuggewichtes als Resultierende der Gravitation sind in signifikanter Menge mit sehr gutem Wirkungsgrad in Elektrizität um. Die damit hergestellte Strommenge ist kongruent zum Fahrzeuggewicht.

Je höher das Gewicht, desto größer ist die Stromausbeute. Bei einem Fahrzeug-Gesamtgewicht von beispielsweise zwei Tonnen wirkt bei der Federbewegung auf jedes Fahrzeugrad **(1)** eine (Gewichts-)Kraft von circa 500 kg ein, wodurch selbst bei relativ geringen Federungshüben die durch Fahrbahnunebenheiten ständig entstehen,große Strommengen generiert werden können,je nach Gewicht und konstruktiver Auslegung.

Die hier gewonnene Stromenergie kann mit einer vereinfachten theoretischen Überlegung wie folgt als näherungsweiser Durchschnittswert ermittelt werden.Die variablen Parameter Federungshub der Fahrzeugräder, Wirkkraftverstärkung durch mechanische und/oder hydraulische Kraftverstärker, Dimensionierung und Wirkungsgrad der Lineargeneratoren, Energieverluste durch Übertragungselemente usw. werden vereinfachend nicht berücksichtigt oder als Konstante betrachtet.

Bei einem Elektrofahrzeug mit beispielsweise zwei Tonnen Gesamtgewicht und vier Rädern mit je einen der erfindungsgemäßen Lineargeneratoren,errechnet sich die damit erzeugte Energie pro gefahrenem Kilometer wie folgt:

Unter der Annahme, dass jedes der vier Räder im Durchschnitt einen Federungsweg von +/- 10 mm pro Dezimeter der zurückgelegten Fahrtstrecke hat, errechnet sich ein Federungshub von 200 m pro Rad bei einer Fahrtstrecke von einem Kilometer. Der Gesamt-Federungshub für alle vier Räder ist also 800 m pro Fahrtkilometer. Bei dem angenommenen Gewicht von 500 kg (ca.5.000 N) je Fahrzeugrad **(1)** das als kinetische Energie auf den Lineargenerator **(7)** einwirkt, errechnet sich bei den oben angenommenen Prämissen eine so erzeugte Energie von 4.000.000 Nm (4 MNm) pro Fahrtkilometer.Dies sind ca. 1,1 kWh je Fahrtkilometer. Bei Ansatz von (unrealistisch hohen) 50% Energie-Umwandlungs-Verlusten bleiben mindestens 0,5 kWh/km beziehungsweise 50 kWh auf 100 km Fahrtstrecke.

Dies ist mehr als ausreichend Energie nicht nur für die Elektro-Antriebsmotoren sondern auch für die Nebenverbraucher Heizung,Klimaanlage usw. die in Akkus und/oder Kondensatoren zwischengespeichert werden kann.

Als Beispiel für die durchschnittlich nötige Strommenge die der Antriebsmotor eines Elektroautos benötigt,wird der schon zur Serienreife entwickelte "Tesla Roadster" der Firma Tesla Motors USA,genannt.Der dort verwendete 3-Phasen-Asynchronmotor von 185 kW Leistung hat einen Stromverbrauch von 12 bis 18 kWh pro 100 km Fahrtstrecke (Durchschnitt 133 Wh/km).

Wie bereits erwähnt kann das System bei entsprechender Auslegung nicht nur die üblichen Federungs- und Dämpfungsfunktionen erfüllen, sondern zusätzlich eine Fahrzeugniveau-Regulierung und auch alle sonstigen Möglichkeiten eines sogenannten "aktiven Fahrwerkes" zur Eliminierung von Nick,- Wank,- und Rollbewegungen der Karosserie in hocheffizienter Weise. Zusätzlich kann auch beim Kurvenfahren eine Karosserieneigung zum Kurven-Innenradius realisiert werden.In variierter Version kann problemlos ein Allradantrieb und auch Allradlenkung integriert werden. Siehe hierzu beispielsweise **Fig.7**

In **Fig.11** und **Fig.12** ist benannt:
Vector Fahrtrichtung **(FR)**
Fahrbahn **(FB)**
Fahrbahn-Erhöhung **(FB.1)**
Fahrbahn-Absenkung **(FB.2)**
Karosserie-Höhe normal **(H.norm)**
Karosserie-Höhe über-normal **(H.pos)**
Karosserie-Höhe unter-normal **(H.neg)**
Vector Gewicht beim Einfedern **(G.einf)**
Vector Gewicht beim Ausfedern **(G.ausf)**
Vector Gewicht in Normalhöhe **(G.norm)**
Vector Vertikal-Kraft,positive Richtung **(K.vert.pos)**
Vector Vertikal-Kraft,negative Richtung **(K.vert.neg)**
Weg Einfedern bei Fahrbahnerhöhung **(A>B)**
Weg Ausfedern bei Fahrbahnerhöhung **(B>C)**
Weg bei Dämpfungs-Nachschwingung 1 **(C>D)**
Weg Ausfedern bei Fahrbahnabsenkung **(E>F)**
Weg Einfedern bei Fahrbahnabsenkung **(F>G)**
Weg bei Dämpfungs-Nachschwingung 2 **(G>H)**
Wegsensor **(WS)**
Drucksensor **(DS)**
magnetisch indizierte Gegenkraft **(K.mag)**
hydraulische Druckkraft **(K.hydr)**

**Fig.11** zeigt die Bewegung des Fahrzeuges **(3)** in Fahrtrichtung **(FR).** In Position **(A)** beginnt die Fahrbahnerhöhung **(FB.1)** die sich bis zur Position **(C)** erstreckt. Das Fahrzeugrad **(1)** bewegt sich über die Strecke **(A>C)** wobei der Weg **(A>B)** eine Einfederung des Rades bewirkt.

In der Position **(B)** erreicht das Fahrzeugrad **(1)** den höchsten Punkt beziehungsweise den maximalen Einfederweg.

Die hier einwirkenden Kräfte sind progressiv ansteigend als die Vectoren **(K.vert.pos)** dargestellt.Diese wirken gegen die Gewichtskraft,gezeigt als Vector **(G.norm)** die über das Federungselement **(2)** mit dem variablen hydraulischem Druck auf das Fahrzeugrad **(1)** ausgeübt wird.

Bei der Strecke **(B>C)** macht das Fahrzeugrad **(1)** eine Ausfederbewegung und erreicht in der Position **(C)** wieder die Normalebene der Fahrbahn **(FB).**

Sowohl bei der Einfederungsbewegung als auch bei der Ausfederungsbewegung des Fahrzeugrades **(1)** wird in dem gekoppelten Lineargenerator **(7)** in bekannter Weise durch Induktion Strom generiert.

Sofern die Dämpfungswirkung durch die magnetische Gegenkraft **(K.mag)** des Lineargenerators **(7)** bei der Stromproduktion nicht ausreichend ist macht das Fahrzeugrad **(1)** einige sich abschwächenden Nach-Federbewegungen, die vom elastischen Fahrzeugreifen aufgenommen und gedämpft werden.

Bei zu großen vertikalen Restkräften der Einfederungsbewegung und nicht genügender Dämpfung durch den Reifen wird die Karosserie **(3)** aus ihrer normalen Karosseriehöhe **(H.norm)** vertikal angehoben auf die übernormale Karosseriehöhe **(H.pos)** wodurch die überschüssige Restenergie vernichtet wird.

Bei der Bewegung des Fahrzeugrades **(1)** von der Position **(A)** zu **(B)** bewegt es sich vertikal nach oben,wodurch der Hydraulikdruck erhöht wird, weil die zusätzliche Kraft **(K.ver.pos)** auf den Druckzylinder **(DK-4)** ausgeübt wird.

Dies wird durch den Wegsensor **(WS)** und / oder den Drucksensor **(DS)** registriert und der Regelelektronik **(16)** mitgeteilt. Diese gibt das Signal zur Druckminderung oder schaltet über das Ventil die zugehörige Druckkammer**(DK.4)** drucklos.Somit kann die Einfederbewegung **(K.vert.pos)** des Fahrzeugrades **(1)** ohne Widerstand erfolgen und der dabei aktivierte Lineargenerator **(7)** kann die gesamte kinetische Energie beim Einfedern zu nahezu 100% in Strom umwandeln, bis das Fahrzeugrad **(1)** die Position **(B)** erreicht hat.

Dabei erzeugt diese Stromherstellung gemäß den bekannten physikalischen Induktions-Gesetzen im Lineargenerator **(7)** die magnetische Gegenkraft **(K.mag),** die in Gegenrichtung zu Einfederbewegung als Kraftvector wirksam ist und diese dämpft bis die Geschwindigkeit und Bewegung in der Position **(B)** Null ist.

Die Dämpfungswirkung durch die magnetische Gegenkraft **(K.mag)** kann in einem weiten Bereich von der Regelelektronik **(16)** sehr reaktionsschnell durch eine variable Regelung der Stromstärke und daraus resultierende Magnetfeldstärke entsprechend den hinterlegten Parametern und Schaltalgorithmen beliebig variiert werden,wodurch die Federungskennung (Dämpfungsstärke) und damit die Federungseigenschaften und Strassenlage den Erfordernissen entsprechend sehr schnell und automatisch angepasst werden können.

Bei weiterer Bewegung des Fahrzeuges **(3)** in Fahrtrichtung **(FR)** von Position **B** zu **C** federt das Fahrzeugrad **(1)** wieder von der Maximalposition **B** aus bis es in der Position **C** die Normalebene der Fahrbahn **(FB)** erreicht.

Diese Ausfederbewegung wird ebenfalls zur Stromgewinnung genutzt und wird durch das Eigengewicht (Gravitationskraft) des Fahrzeugrades **(1)** und seiner Komponenten (Reifen,Felge, Nabe, Bremse, Radaufgängung) bewirkt. Die dabei wirksamen Kräfte sind in der Grafik **Fig.11** mit den Vectoren **(K.vert. neg)** symbolisch dargestellt.

Im Bedarfsfall kann die Regelelektronik **(16)** durch den Hydraulikdruck in der jeweils zugehörigen Druckkammer **(DK.x)** die Ausfederung positiv oder negativ beeinflussen (beschleunigen oder abbremsen) was sich dementsprechend positiv oder negativ auf den Gesamtwirkungsgrad bei der Stromgewinnung des Systems auswirkt,da dieses hydraulische Abbremsen einer konventionellen "Stoßdämpferfunktion" entspricht und so die Menge der Stromproduktion vermindert.

Gleichzeitig ist optimalerweise ein Druck-und Volumenausgleich zwischen den Druckkammern **4 (DK.4)** und **3 (DK.3)** vorgesehen durch eine hydraulische Bypassleitung **(9c)**,die in jedem Bedarfsfall von der Regelelektronik **(16)** mit einem dazwischen montierten Sperrventil **(14)** geöffnet oder geschlossen wird, sodass ständig in beiden Druckkammern **4 (DK.4)** und **3 (DK.3)** ein gleicher Druck herrscht, der dem anteiligen Fahrzeuggewicht entspricht, das auf dem Federungselement **(2)** lastet. Der Vorteil dabei ist,dass durch diese Konstruktion weniger Hydraulikenergie verloren geht und der Gesamtwirkungsgrad (Elektrizitätsmenge) wesentlich höher ist,da die Hydraulikpumpe **(P.x)** weniger Hydraulikfluid nachpumpen muß sondern lediglich die energetischen Strömungsverluste in den Leitungen und an den Ventilen (Druckverluste/Strömungswiderstände) kompensiert.

Wenn das Fahrzeugrad **(1)** die Position **C** erreicht hat, wirkt die Normalkraft, der Vector Gewicht **(G.norm)** auf dieses ein. Der Vector Gewicht **(G.norm)** beträgt je Rad etwa 25% des Fahrzeug-Gesamtgewichtes bei gleicher Achslastverteilung. Bei diesem Stromerzeugungssystem ist für den Wirkungsgrad ein höheres Fahrzeuggewicht von Vorteil. Bei einer kleinflächigen Fahrbahn-Erhöhung oder Absenkung werden mindestens zwei Lineargeneratoren **(7)** beim Darüberfahren im jeweils zugehörigen Vorder-und Hinterrad akiviert. Wenn sich die Erhöhung oder Absenkung über die Gesamtbreite der Fahrbahnfläche oder mindestens der Fahrzeugbreite (Spurbreite) erstreckt werden sämtliche Lineargeneratoren **(7)** in allen vier Fahrzugrädern **(1)** aktiviert.

Die Strecke **C** bis **D** ist der Nachfederbereich wenn eventuell noch kinetische Restenergien vorhanden sind, die nicht ausreichend gedämpft wurden.Im Bereich C bis D hat das Fahrzeugrad **(1)** eventuell noch die Tendenz weiter auszufedern.Dies verhindert die nun ebene Fahrbahn **(FB)** sodass noch vorhandene Restkräfte entweder von der Regelelektronik **(16)** durch die Hydraulik kompensiert werden müssen und/oder der Reifen des Fahrzeugrades **(1)** nimmt diese Kräfte auf und verformt sich und/oder die Fahrzeug-Karosserie wird unerwünschterweise von der Normalhöhe **(H.norm)** positiv (vertikal) angehoben zur Höhe **(H.pos).** Die dabei wirksamen vertikal-negativen Kräfte bewirken dass der Reifen des Fahrzeugrades **(1)** weiter den Kontakt zur Fahrbahnoberfläche **(FB)** hält und nicht kurzzeitig abhebt,was ansonsten der Fahrsicherheit abträglich wäre.

Im Fall der Reifenverformung und einer vertikalen Karosseriebewegung geht selbstverständlich die zugehörige kinetische beziehungswseise primäre Komponente der Gravitations-Energie für die Stromerzeugung mit den Lineargeneratoren **(7)** verloren, weshalb optimalerweise die Programmierung (Algorithmen) der Regelelektronik **(16)** so ausgelegt sein muß, dass dies vermieden wird.

In dem alternativen Fall,wenn das Fahrzeugrad **(1)** durch eine Fahrbahnsenke oder Schlagloch (Strecke **E** bis **G** in **Fig.12****)** fährt ist die Funktion der Stromgewinnung prinzipiell identisch.

**Fig.12** zeigt die Bewegung des Fahrzeugrades **(3)** in der gleichen Fahrtrichtung **(FR)** In Position **E** beginnt die Fahrbahnabsenkung **(FB.2)** die sich bis Position **G** erstreckt.Das Fahrzeugrad **(1)** bewegt sich über die Strecke **(E>G)** wobei das Fahrzeugrad **(1)** auf dem Weg **(E>F)** eine Ausfederbewegung ausführt.

In der Position **F** erreicht das Fahrzeugrad **(1)** seinen tiefsten Punkt beziehungsweise den maximalen Ausfederweg.Die hier wirksamen Kräfte sind progressiv sich vergrössernd als die Vectoren **(K.vert.neg)** dargestellt.

Dabei wirkt grundsätzlich als kinetische Energie die der gekoppelte Linargenerator **(7)** in Strom umwandeln kann, die gesamte Kraft **(G.norm),**dargestellt als die Vectoren **(K.vert.neg)** die ca.25% des Fahrzeug-Gesamtgewichtes entsprechen,auf den Lineargenerator **(7)** ein, der diese kinetische beziehungsweise die zugehörigen Komponenten der primären Gravitationsenergie sodann in Elektrizität umwandelt,wobei die bei der Strominduktion entstehende magnetische Gegenkraft **(K.mag)** ("Lorentzkraft") dieser Ausfederbewegung entgegenwirkt und eine bewegungsdämpfende Wirkung ausübt die prinzipiell der eines üblichen Hydraulik-Stossdämpfers entspricht und darüber hinaus von der Regelelektronik **(16)** in seiner Wirkung (Dämpfungskraft) sehr schnell und in weiten Bereichen variabel und bedarfsgerecht angepasst werden kann durch elektrische Modulation der Stromstärke und damit der nach den physikalischen Gesetzen kongruenten magnetischen Feldstärke und davon abhängigen magnetischen Gegenkraft ("Lorentzkraft").

Wenn das Fahrzeugrad **(1)** die Position **F** erreicht hat erhält die Regelelektronik **(16)** durch den Wegsensor **(WS)** und Drucksensor **(DS)** die Information, dass die Ausfederungsbewegung beendet ist.

Die Regelelektronik **(16)** schaltet dann die zugehörige Hydraulikkammer **(DK.4) (****Fig.3****)** drucklos sodass die anschliessende Einfederbewegung auf der Strecke Position **F** bis **G** nahezu ohne hydraulischen Widerstand ist und der Lineargenerator **(7)** die kinetische Energie aus den Kräften des Vectors **(K.vert.pos)** mit einem optimalen Wirkungsgrad von fast 100% zur Stromgewinnung nutzt.

Gleichzeitig wird die Hydraulik-Bypassleistung **(9c)** geöffnet, wodurch wiederum der Druck- und Volumenausgleich des Hydraulikfluids in den beiden Druckkammern **3 (DK.3)** und **4 (DK.4)** erfolgt.Das Fluid wird also von der Druckkammer **4 (DK.4)** zur Druckkammer **3 (DK.3)** geleitet, wobei gleichzeitig der Druck **P (P.hydr)** konstant bleibt, was durch die Regelelektronik **(16)** mit Hilfe der Drucksensoren **DS.3** und **DS.4** überwacht wird.

Wenn die Position **G** erreicht ist, befindet sich das Fahrzeugrad **(1)** wieder auf der normalen Fahrbahnebene **(FB).** Die Einfederbewegung **(K.vert.pos)** muß hier beendet sein indem die Einfederkräfte durch die magnetische Induktions-Gegenkraft **(K.mag)** auf den Wert Null gedämpft wurden, da ansonsten auf der Strecke **G** bis **H** Nachfederbewegungen des Fahrzeugrades **(1)** erfolgen würden, was nachteilig für die Strassenlage des Fahrzeuges **(3)** wäre.

Die Regelelektronik **(16)** muß also durch entsprechende Variierung der Stromstärke des Spulenstromes im Lineargenerator **(7)** die magnetische Gegenkraft **(K.mag)** den jeweiligen Erfordernissen entprechend anpassen um mit der Verstärkung oder Abschwächung der induzierten magnetischen Gegenkraft **(K.mag)** sicherzustellen, dass die Einfederbewegung des Fahrzeugrades **(1)** in oder kurz vor der Position **G** beendet ist damit das Rad nicht nachfedert oder gar abhebt sondern auf der Straßenoberfläche bleibt.

Falls diese magnetische Dämpfung **(K.mag)** in Ausnahmefällen nicht ausreichen sollte, kann die Regelelektronik **(16)** das unerwünschte Nachfedern aktiv unterdrücken durch entsprechende hydraulische Gegendruckmassnahmen (Druckerhöhung in Druckkammer DK.4) infolge elektronischer Aktivierung kompensatorischer Gegenkräfte **(K.hydr)** die die Restenergien vernichten und die Einfederungsbewegung bremsen beziehungsweise beenden.

Nachfolgend die Patentansprüche. Sämtliche beschriebenen Merkmale und Variationen der Erfindung sowie ihre nicht explizit dargestellten,sinngleichen Auslegungen mit den jeweils zugehörigen Patentansprüchen und den beschriebenen Vorrichtungen und Verfahren und davon ableitbaren Varianten können sowohl einzeln als auch in beliebigen Kombinationen und Variationen erfindungswesentlich sein und bei beliebig variabel kombinierten Anwendungen in der Praxis eingesetzt werden.

## Patentansprüche

1. Fahrzeug zum Transport von Personen und/oder Gütern, das sich auf Strassen oder alternativ auf Schienen fortbewegt und zumindest teilweise elektrische Energie und Elektromotoren als Antriebsmedium benutzt, wobei die verwendete elektrische Energie überwiegend oder zu einem wesentlichen Teil fahrzeugintern hergestellt wird aus Umwandlung von kinetischer Energie, insbesondere Komponenten der kinetischen Energie von Gravitations-Einwirkungen auf die Fahrzeug-Karosserie, -Räder und Radaufhängungen sowie Komponenten der kinetischen Energie aus Fliehkräften und positiven oder negativen vertikalen Beschleunigungs-Bewegungen der Fahrzeug-Karosserie (3), Fahrzeugräder (1) und Radaufhängungen (4) mit nachfolgender Zwischenspeicherung der so gewonnenen Elektrizität in Akkus oder anderen geeigneten Speichermedien, beispielsweise Hochleistungs-Kondensatoren, bis zur Verwendung des Stroms in den Antriebsmotoren des Fahrzeuges oder anderen Stromverbrauchern, wobei das stromproduzierende Federungs- und Dämpfungselement (2) am unteren Ende durch ein Gelenk (4a) mit der Radaufhängung (4) verbunden ist und an seinem oberen Ende durch die Federbein-Aufhängung (3a) mit dem oberen Teil der Karosserie (3) verbunden ist, und wobei sich im Inneren des Federungs- und Dämpfungselement (2) sich ein stromproduzierender Lineargenerator (7) befindet, der aus dem Stator (8), der in der Zentralachse befindlichen Kolbenstange (6.1/6.2) und einem daran montierten Aktuator (11) besteht, Wobei der Stator (8) ein stromführenden Wicklungen und einen innenliegenden zylinderförmigen Hohlraum aufweist, in dem ein zylinderförmiges Bauteil als Aktuator (11), der an einer Kolbenstange (6.1/6.2) befestigt ist, bewegt werden kann, und wobei beim Bewegen der Kolbenstange (6.1/6.2) innerhalb des Stator-Magnetfeldes durch Induktion Elektrizität generiert wird, und wobei der Aktuator (11) aus stromführenden Wicklungen besteht oder in der Art eines Seltenerden-Permanentmagnet ausgeführt ist **dadurch gekennzeichnet,**
**dass** das Fahrzeug einen doppelt wirkenden Hydraulikzylinder, bezeichnet als hydraulisches Feder- und Dämpferelement (5), an zumindest einem Fahrzeugrad aufweist, das hydraulische Feder- und Dämpferelement (5) zwei Druckkolben (KO.1/ KO.2) und vier Druckkammern (DK.1/ DK.2/ DK.3/ DK.4) aufweist, wobei die erste und zweite Druckkammern (DK.1/ DK.2) durch den ersten Druckkolben (KO.1) voneinander getrennt werden, und wobei die dritte und vierte Druckkammern (DK.3/ DK.4) durch den zweiten Druckkolben (KO.2) voneinander getrennt werden, und wobei
die Kolbenstange (6.1/6.2) an einem Ende den ersten Druckkolben (KO.1) und am anderen Ende den zweiten Druckkolben (KO.2) trägt,
wobei beide Druckkolben (KO.1/KO.2) Teil des hydraulischen Feder- und Dämpferelementes (5) in den Druckzylindern (DZ.1) und (DZ.2) sind.

2. Fahrzeug nach Anspruch 1,
**dadurch gekennzeichnet,**
**dass** der Lineargenerator (7) mittig zwischen Doppeldruckkammern 1 und 2 (DK. 1/DK.2) sowie 3 und 4 (DK.3/DK.4) mit den zugehörigen Druckkolben 1 (KO.1) und 2 (KO.2) angeordnet ist und die jeweiligen Kolbenstangen (6.1) und (6.2) miteinander verbunden sind und mittig davon der Aktuator (11) des Lineargenerators (7) fest montiert ist.

3. Fahrzeug nach Anspruch 1 oder 2,
**dadurch gekennzeichnet,**
**dass** der mindestens eine hydropneumatische Hochdruckspeicher (15) mit Druckverstärker (34) für jedes Fahrzeugrad (1) einzeln vorgesehen ist oder alternativ für mehrere Fahrzeugräder (1) in Dimension und technischen Eigenschaften als hydraulisches Feder-und Dämpferelement (5) ausgelegt ist und verwendet wird.

4. Fahrzeug nach einem der Ansprüchen 1 bis 3,
**dadurch gekennzeichnet,**
**dass** die untere Druckkammer 1 (DK.1) und die obere Druckkammer 2 (DK.2) des Druckkolbens 1 (KO.1) sowie die untere Druckkammer 3 (DK.3) und die obere Druckkammer 4 (DK.4) des Druckkolbens 2 (DK.2) jeweils durch eine Hydraulikleitung ( "Bypassleitung") (9c) direkt miteinander verbunden sind, wobei dies Bypassleitung (9c) durch ein integriertes, von die Regelelektronik (16) elektrisch aktivierbares Hydraulik-Sperrventil (14), bevorzugt einem sogenannten Sitzventil, geschlossen und geöffnet werden kann, wodurch bedarfsgerecht ein Druckausgleich und Hydraulikfluid-Volumenausgleich zwischen der jeweiligen unteren und oberen Druckkammer erfolgt.

5. Verfahren für Fahrzeuge gemäß Anspruch 1, zur Herstellung fahrzeuginterner elektrischer Energie durch Umwandlung von Komponenten aus der kinetischen Energie des Fahrzeuges sowie Komponenten aus der Gravitation die auf die Fahrzeugkarosserie einwirkt, in Elektrizität, wobei das Verfahren mit mindestens einem doppelt wirkenden Hydraulikzylinder, bezeichnet als hydraulisches Feder- und Dämpferelement (2, 5), je Fahrzeugrad durchgeführt wird, und wobei sich im Inneren des Federungs- und Dämpfungselement (2) sich ein stromproduzierender Lineargenerator (7) befindet, der aus dem Stator (8), der in der Zentralachse befindlichen Kolbenstange (6.1/6.2) und einem daran montierten Aktuator (11) besteht, und wobei
der in geeigneter Weise mit der Fahrzeug-Radaufhängung (4) und/oder der Fahrzeug-Karosserie (3) verbunden ist und somit zumindest Teile der kinetischen Energien und Komponenten der Gravitation als Krafteinwirkung aufnimmt und diese mechanisch und / oder pneumatisch und/oder bevorzugt hydraulisch auf den Lineargenerator (7) überträgt, um durch Induktion Elektrizität zu erzeugen,
wobei die mit geeignet programmierten Algorithmen ausgestattete Regelelektronik (16) sämtliche Funktionen elektronisch steuert unter Verwendung der relevanten Sensor-Parameter Druck, Weg, Position, Beschleunigung, Geschwindigkeit einschließlich sonstiger relevanter Parameter der Fahrzeug - wie beispielsweise Geschwindigkeit, Verzögerung, Querbeschleunigung usw.,,
**dadurch gekennzeichnet,**
**dass** der Verfahrweg und die jeweiligen Positionen von den beiden Druckkolben 1 (KO.1) und 2 (KO.2) sowie dem bewegungskongruenten Aktuator (11) ständig von mindestens einem geeigneten Sensor, der bevorzugt ein elektronischer Wegmess-Sensor (WS) und/oder mindestens ein Drucksensor (DS) ist, überwacht wird und damit die aktuelle Position der beiden Druckkolben (K0.1/K0.2) zwischen dem jeweiligen oberen und unteren Totpunkt (OT/UT) registriert und der Regelelektronik (16) gemeldet wird.

6. Verfahren nach Anspruch 5,
**dadurch gekennzeichnet,**
**dass** mindestens zwei Fahrzeugräder (1) ihrer kinetischen Energie in Form von hydraulischem Druck (K.hydr) auf einen gemeinsamen Lineargenerator (7) abgeben.

7. Verfahren nach Anspruch 5 oder 6,
**dadurch gekennzeichnet,**
**dass** die Bewegung des Aktuators (11) im Magnetfeld des Stators (8) eine Gegenkraft gegen die Bewegungsrichtung des Aktuators (11) verursacht die proportional zur Magnetfeldstärke ist und prinzipiell die gleiche Funktion (Bewegungsdämpfung) bewirkt, wie sie die üblichen Hydraulikstoßdämpfer und die zugehörige Spiralfeder aufweisen, wobei die Stärke der Dämpfungswirkung durch die Regelelektronik (16) variiert wird durch Veränderung der magnetischen Feldstärke des Stators (8) und / oder gegebenenfalls Aktuators (11) infolge elektronisch geregelter Veränderung der Stromstärke/Stromamplitude und damit der Magnetfeldstärke im Stator (8) oder gegebenenfalls im Aktuator (11), sofern dieser sein Magnetfeld durch eine stromdurchflossene Spule herstellt.

8. Verfahren nach einem der Ansprüche 5 bis 7,
**dadurch gekennzeichnet,**
**dass** die magnetische Dämpfungswirkung die die magnetisch- induktive Gegenkraft (K.mag) verursacht , elektronisch variiert wird und kurz vor dem Erreichen des oberen Totpunktes (OT.2) oder im Bedarfsfall in jeder beliebigen anderen Position durch Zufuhr von Hydraulikfluid über die Hydraulikleitung (9.2b) die positive Vertikalbewegung (Y1) des Druckkolbens (KO.2) abgebremst, also gedämpft und im Ausnahmefall bedarfsgerecht gestoppt wird, wobei auch dies über geeignet ausgelegte Drosselventile von der Regelelektronik (16) variabel dosiert durchgeführt wird.

9. Verfahren nach einem der Ansprüche 5 bis 8,
**dadurch gekennzeichnet,**
**dass** eine Niveauregulierung durch entsprechende Programmierung der Algorithmen in der Regelelektronik (16) realisiert wird durch Veränderung des Arbeitsabstandes (A) der Druckkolben 1 (KO.1) und 2 (KO.2) und zwar jeweils für die beiden Räder einer Fahrzeugachse, wobei eine stärkere Belastung wegen Beladung den Arbeitsabstand (A) durch die Zuladungskraft (b) um die Belastungsänderung verringert, die durch Druckerhöhung in einer Druckkammer 1 (DK-I) und/oder Druckverminderung in einer Druckkammer 2 (DK-2) und/oder alternativ Druckerhöhung in einer Druckkammer 4 (DK-4) und/oder Druckminderung in einer Druckkammer 3 (DK-3) den Abstand (B) wieder mit dem Abstand (A) kongruent macht und so das gleiche Höhen-Niveau der Fahrzeug-Mittelachse wieder herstellt.

10. Verfahren nach einem der Ansprüche 5 bis 9,
**dadurch gekennzeichnet,**
**dass** eine zumindest teilweise Kompensation von Fliehkräften bei Kurvenfahrt durch Höhenveränderungen der Karosserie von den beiden kurvenäußeren zu den kurveninneren Rädern realisiert wird indem die Regelelektronik (16) den Arbeitsabstand der Druckkolben (5.1 c/5.2c) von den Federbeinen (2) der kurveninneren Radaufhängungen (4) proportional zur Geschwindigkeit beziehungsweise der wirksamen Fliehkraft variabel verringert und/oder der Arbeitsabstand (A) der Druckkolben (5.1c/5.2c) in den Federbeinen (2) der kurvenäußeren Radaufhängungen (4) proportional zur Geschwindigkeit bzw. der wirksamen Fliehkraft variabel vergrößert wird, wodurch die kurveninnere Seite des Fahrzeuges (1) unter der Normalhöhe (H. norm) und die kurvenäußere Seite des Fahrzeuges (1) über der Normalhöhe (H. norm) sich befindet und die Fahrzeugquerachse damit eine in Richtung der Kurveninnenseite zur Horizontalen geneigte Position einnimmt.

11. verfahren nach einem der Ansprüche 5 bis 10,
**dadurch gekennzeichnet,**
**dass** das anteilige Fahrzeuggewicht (VG) durch die von der Hydraulikpumpe (P.1) über die Hydraulikleitung (9.1a) und einem Einweg-Sperrventil (14) mit Hydraulikfluid gefüllten Druckkammer 1 (DK.1) und dem dort vorhandenen, gleich hohen Gegendruck (Vp.1) aufgenommen und ständig durch den Drucksensor (DS.1) überwacht und im Bedarfsfall elektronisch geregelt, verändert wird.

12. verfahren nach einem der Ansprüche 5 bis 11,
**dadurch gekennzeichnet,**
**dass** je Fahrzeugrad (1) mindestens ein Rotationsgenerator (29) verwendet wird, der von einem Hydromotor (33) angetrieben wird, und dieser wiederum mit hydraulisch übertragener Energie aus den Bewegungen des Fahrzeugrades (1) und/ oder den vertikalen Relativ-Bewegungen der Karosserie mit unter Druck stehendem Hydraulikfluid gespeist wird, das aus den Druckzylindern 1 und 2 (DZ.1/DZ.2) zu Hydroenergie (hydraulischer Druck) generiert wird, die in den Hydraulikzylindern 1 und 2 (DZ.1/DZ.2) beziehungsweise im Fahrzeug-Federungssystem (5) integriert sind und Komponenten der kinetischen und Gravitationsenergie über Hydraulikleitungen (9.x) bevorzugt über einen Druckverstärker (34) und einem Hochdruckspeicher (15) zum Hydromotor (33) weiterleiten, der als Antriebselement des Rotationsgenerators (29) wirksam ist.

13. Verfahren nach einem der Ansprüche 5 bis 12,
**dadurch gekennzeichnet,**
**dass** die Komponenten der kinetischen Energie und Gravitation von mindestens zwei oder mehr Rädern (1) durch die jeweils zugehörigen hydraulischen Druckzylinder (DZ. 1 bis DZ.x) in Hydroenergie (hydraulischen Druck) umgewandelt und über entsprechende Hydraulikleitungen und Ventile (12) mit Drucksensoren (DS. x) über mindestens einen Druckverstärker (34) beispielsweise einem Differentialzylinder zu mindestens einem hydro-pneumatischen Hochdruckspeicher (15) geführt wird und von dort zu mindestens einem Hydromotor (33), der mindestens einen Rotationsgenerator (29) antreibt, der damit in bekannter Weise Strom produziert.

## Claims

1. A vehicle for transporting persons and/or goods, which vehicle moves on roads or alternatively on rails and at least partially uses electrical energy and electric motors as a drive medium, wherein the electrical energy used is produced mainly or for a substantial part within the vehicle from the conversion of kinetic energy, in particular from components of the kinetic energy of gravitational effects on the vehicle body, vehicle wheels and wheel suspensions as well as from components of the kinetic energy of centrifugal forces and positive or negative vertical acceleration movements of the vehicle body (3), vehicle wheels (1) and wheel suspensions (4), with subsequent temporary storage of the electricity generated in this manner in batteries or other suitable storage media, for example high-capacity capacitors, until use of the current in the drive motors of the vehicle or other electricity consumers, wherein the current-generating suspension and damping element (2) is connected at the lower end to the wheel suspension (4) by means of a joint (4a) and is connected at the upper end to the upper part of the body (3) by means of the strut suspension (3a), and a current-generating linear generator (7) is situated in the interior of the suspension and damping element (2), which generator consists of the stator (8), the piston rod (6.1/6.2) situated in the central axis and an actuator (11) mounted thereon, wherein the stator (8) is composed of electrically conductive windings and has an interior cylindrical cavity, in which a cylindrical component part serving as the actuator (11), which is fastened to a piston rod (6.1/6.2), is able to move, and wherein, when the piston rod (6.1/6.2) moves inside the stator magnetic field, electricity is thereby generated by induction, and wherein the actuator (11) either consists of electrically conductive windings or is configured as a rare earth permanent magnet,
**characterised in that**
the vehicle has a double-action hydraulic cylinder, referred to as hydraulic spring and damper element (5), at at least one vehicle wheel,
**in that** the hydraulic spring and damper element (5) has two pressure pistons (KO.1/KO.2) and four pressure chambers (DK. 1/DK.2/DK.3/DK.4), the first and second pressure chambers (DK.1/DK.2) being separated by the first pressure piston (KO.1), and the third and fourth pressure chambers (DK.3/DK.4) being separated by the second pressure piston (KO.2), and the piston rod (6.1/6.2) bearing the first pressure piston (KO.1) at one end and the second pressure piston (KO.2) at the other end, the two pressure pistons (KO.1/KO.2) being part of the hydraulic spring and damper element (5) in the pressure cylinders (DZ.1) and (DZ.2).

2. The vehicle according to claim 1,
**characterised in that**
the linear generator (7) is arranged centrally between the double pressure chambers 1 and 2 (DK.1/DK.2) as well as 3 and 4 (DK.3/DK.4) with the associated pressure pistons 1 (KO.1) and 2 (KO.2) and **in that** the respective piston rods (6.1) and (6.2) are connected to each other and the actuator (11) of the linear generator (7) is mounted fixedly in the centre thereof.

3. The vehicle according to claim 1 or 2,
**characterised in that**
the at least one hydropneumatic high-pressure reservoir (15) having a pressure booster (34) is disposed separately for each vehicle wheel (1) or is alternatively designed and used for several vehicle wheels (1), in dimensions and technical properties as a hydraulic spring and damper element (5).

4. The vehicle according to any one of claims 1 to 3,
**characterised in that**
the lower pressure chamber 1 (DK.1) and the upper pressure chamber 2 (DK.2) of pressure piston 1 (KO.1) as well as the lower pressure chamber 3 (DK.3) and the upper pressure chamber 4 (DK.4) of pressure piston 2 (DK.2) are directly connected to each other by means of a hydraulic line ( "bypass line" ) (9c), the bypass line (9c) being able to be closed and opened by means of an integrated hydraulic stop valve (14) electrically activatable by the control electronics (16), said valve preferably being a "seated valve", whereby a pressure equalisation and a hydraulic fluid volume equalisation are effected as and when required between the respective lower and upper pressure chamber.

5. A method for vehicles according to claim 1, the method being for producing in-vehicle electrical energy by converting components of the kinetic energy of the vehicle as well as components of the gravity acting on the vehicle body into electricity, wherein the method is carried out with the help of at least one double-action hydraulic cylinder, referred to as hydraulic spring and damper element (2, 5), per vehicle wheel, and wherein a current-generating linear generator (7) is situated in the interior of the suspension and damping element (2), which generator consists of the stator (8), the piston rod (6.1/6.2) situated in the central axis and an actuator (11) mounted thereon, and wherein said actuator is connected in a suitable manner to the vehicle wheel suspension (4) and/or to the vehicle body (3) and thus absorbs at least some of the kinetic energy and components of gravity as forces and transmits them mechanically and/or pneumatically and/or preferably hydraulically to the linear generator (7), in order to generate electricity by induction,
wherein the control electronics (16) provided with suitably programmed algorithms control all functions electronically using the relevant sensor parameters of pressure, travel, position, acceleration, speed including other relevant parameters of the vehicle such as speed, deceleration, lateral acceleration etc.,
**characterised in that**
the travel and the respective positions of the two pressure pistons 1 (KO.1) and 2 (K.2) as well as of the actuator (11) congruent with the movement are monitored constantly by at least one suitable sensor, which is preferably an electronic travel sensor (WS) and/or at least one pressure sensor (DS), and thus the current position of the two pressure pistons (KO.1/KO.2) between the respective top and bottom dead centres (OT/UT) is registered and communicated to the control electronics (16).

6. The method according to claim 5,
**characterised in that**
at least two vehicle wheels (1) output their kinetic energy in the form of hydraulic pressure (K.hydr) to a common linear generator (7).

7. The method according to claim 5 or 6,
**characterised in that**
the movement of the actuator (11) in the magnetic field of the stator (8) causes a counter force counter to the direction of movement of the actuator (11) which is proportional to the magnetic field strength and in principle effects the same function (movement damping) as the customary hydraulic shock absorbers and associated helical spring, the strength of the damping effect being varied by the control electronics (16) by changing the magnetic field strength of the stator (8) and/or where applicable of the actuator (11) as a result of electronically controlled change in the current strength/current amplitude and thus of the magnetic field strength in the stator (8) or where applicable in the actuator (11), if the latter produces its magnetic field by means of a coil through which current flows.

8. The method according to any one of claims 5 to 7,
**characterised in that**
the magnetic damping effect which causes the magnetically induced counter force (K.mag) is varied electronically, and the positive vertical movement (Y1) of the pressure piston (KO.2) is braked, that is, damped and in exceptional cases stopped as required shortly before the top dead centre (OT.2) is reached or if required in any other position by supplying hydraulic fluid via the hydraulic line (9.2b), wherein this can also be carried out in a variably metered manner by the control electronics (16) by means of suitably designed throttle valves.

9. The method according to any one of claims 5 to 8,
**characterised in that**
self-levelling is realised by corresponding programming of the algorithms in the control electronics (16) by changing the working distance (A) of the pressure pistons 1 (KO.1) and 2 (KO.2) in each case for the two wheels (1) of a vehicle axle, a greater load due to loading reducing the working distance (A) by the change in load due to the loading force (b), which makes the distance (B) consistent again with the distance (A) by means of an increase in pressure in the pressure chamber 1 (DK.1) and/or a reduction in pressure in the pressure chamber 2 (DK.2) and/or alternatively an increase in pressure in the pressure chamber 4 (DK.4) and/or a reduction in pressure in the pressure chamber 3 (DK.3), thus reestablishing the same height level of the vehicle centre axis.

10. The method according to any one of claims 5 to 9,
**characterised in that**
an at least partial compensation of centrifugal forces during cornering by changes in the height of the body of the two outer-curve wheels with respect to the inner-curve wheels is realised **in that** the control electronics (16) variably reduce the working distance of the pressure pistons (5.1c/5.2c) from the struts (2) of the inner-curve wheel suspensions (4) in proportion to the speed or the effective centrifugal force and/or the working distance (A) of the pressure pistons (5.1c/5.2c) in the struts (2) of the outer-curve wheel suspensions (4) is variably increased in proportion to the speed or the effective centrifugal force, as a result of which the inner-curve side of the vehicle (1) is below the normal height (H.norm) and the outer-curve side of the vehicle (1) is above the normal height (H.norm), and the transverse axis of the vehicle thus assumes a position which is inclined with respect to the horizontal in the direction of the inside of the curve.

11. The method according to any one of claims 5 to 10,
**characterised in that**
the proportional vehicle weight (VG) is supported by the pressure chamber 1 (DK.1), which is filled with hydraulic fluid by the hydraulic pump (P.1) via the hydraulic line (9.1a) and a single-way stop valve (14), and by the equal counter pressure (Vp.1) present there and is constantly monitored by the pressure sensor (DS.1) and if required is changed in an electronically controlled manner.

12. The method according to any one of claims 5 to 11,
**characterised in that**
at least one rotation generator (29) is used per vehicle wheel (1), said generator being driven by a hydro motor (33), and the hydro motor is in turn supplied with pressurised hydraulic fluid with the help of hydraulically transmitted energy from the movements of the vehicle wheel (1) and/or the vertical relative movements of the body, the hydraulic fluid being generated as hydroenergy (hydraulic pressure) from the pressure cylinders 1 and 2 (DZ.1/DZ.2), being integrated in the hydraulic cylinders 1 and 2 (DZ.1/DZ.2) or in the vehicle suspension system (5) and passing components of the kinetic and gravitational energy on to the hydro motor (33), via hydraulic lines (9.x), preferably via a pressure booster (34) and a high-pressure reservoir (15), the hydro motor being effective as drive member of the rotation generator (29).

13. The method according to any one of claims 5 to 12,
**characterised in that**
the components of the kinetic energy and of gravity of at least two or more wheels (1) are converted into hydro energy (hydraulic pressure) by means of the hydraulic pressure cylinders (DZ. 1 to DZ.x) associated in each instance and are guided to at least one hydropneumatic high-pressure reservoir (15), via corresponding hydraulic lines and valves (12), with the help of pressure sensors (DS. x), via at least one pressure booster (34), for example a differential cylinder, and from there, to at least one hydro motor (33), which drives at least one rotation generator (29), which thus produces current in the known manner.

## Revendications

1. Véhicule pour le transport de personnes et/ou de marchandises, se déplaçant sur des routes ou en alternative sur des rails, et fonctionnant du moins partiellement à l'aide d'énergie électrique et de moteurs électriques servant de moyens d'entraînement, dans lequel l'énergie électrique employée est produite essentiellement ou en grande partie, de façon interne au véhicule, par conversion d'énergie cinétique, notamment de composantes de l'énergie cinétique sous l'effet de la gravité sur la carrosserie du véhicule, sur les roues du véhicule et sur les suspensions, ainsi que de composantes de l'énergie cinétique à partir de forces centrifuge et à partir de mouvements d'accélération verticaux positifs ou négatifs de la carrosserie (3) du véhicule, des roues (1) du véhicule et des suspensions (4), l'électricité ainsi obtenue étant ensuite stockée de façon intermédiaire dans des batteries ou dans d'autres éléments de stockage appropriés, par exemple des condensateurs de grande capacité, jusqu'à l'utilisation du courant dans les moteurs d'entraînement du véhicule ou d'autres consommateurs d'électricité, dans lequel l'élément (2) d'amortissement et d'affaiblissement produisant du courant, à l'extrémité inférieure, est relié avec la suspension (4) par une articulation (4a) et, à son extrémité supérieure, est relié avec la partie supérieure de la carrosserie (3) par la jambe de suspension (3a), et dans lequel un générateur linéaire (7) produisant du courant est situé à l'intérieur de l'élément (2) d'amortissement et d'affaiblissement, ledit générateur se composant du stator (8), de la tige de piston (6.1/6.2) étant située dans l'axe central et d'un actionneur (11) y étant monté, dans lequel le stator (8) présente des enroulements conducteurs et une cavité cylindrique située dedans, un composant cylindrique, servant d'actionneur (11) qui est attaché à une tige de piston (6.1/6.2), étant apte à se mouvoir dans ladite cavité, et dans lequel, en mouvant la tige de piston (6.1/6.2), dans le champ magnétique du stator, de l'électricité est générée par induction, et dans lequel l'actionneur (11) se compose d'enroulements conducteurs ou est conçu sous la forme d'un aimant permanent de terres rares,
**caractérisé en ce que**
le véhicule présente un vérin hydraulique à double action, appelé un élément (5) amortisseur et affaiblisseur hydraulique, à du moins une roue du véhicule,
**en ce que** l'élément (5) amortisseur et affaiblisseur hydraulique présente deux pistons (KO.1/KO.2) et quatre chambres de pression (DK. 1/DK.2/DK.3/DK.4), les premières et deuxièmes chambres de pression (DK.1/DK.2) étant séparées par le premier piston (KO.1), et les troisièmes et quatrièmes chambres de pression (DK.3/DK.4) étant séparées par le deuxième piston (KO.2), et la tige de piston (6.1/6.2), à l'une de ses extrémités, portant le premier piston (KO.1) et, à l'autre de ses extrémités, portant le deuxième piston (KO.2), les deux pistons (KO.1/KO.2) étant partie de l'élément (5) amortisseur et affaiblisseur hydraulique dans les cylindres compresseur (DZ.1) et (DZ.2).

2. Véhicule selon la revendication 1,
**caractérisé en ce que**
le générateur linéaire (7) est disposé au milieu entre des chambres de pression double 1 et 2 (DK. 1/DK.2) ainsi que 3 et 4 (DK.3/DK.4) avec les pistons associés 1 (KO.1) et 2 (KO.2) et **en ce que** les tiges de piston respectives (6.1) et (6.2) sont reliées l'une avec l'autre et l'actionneur (11) du générateur linéaire (7) est monté fixement au milieu entre eux.

3. Véhicule selon la revendication 1 ou 2,
**caractérisé en ce que**
ledit au moins un accumulateur haute pression (15) hydropneumatique ayant un multiplicateur de pression (34) est prévu séparément pour chaque roue (1) du véhicule ou, en alternative, est conçu et utilisé pour plusieurs roues (1) du véhicule, comme un élément (5) amortisseur et affaiblisseur hydraulique en ce qui concerne ses dimensions et ses caractéristiques techniques.

4. Véhicule selon l'une quelconque des revendications 1 à 3,
**caractérisé en ce que**
la chambre de pression inférieure 1 (DK.1) et la chambre de pression supérieure 2 (DK.2) du piston 1 (KO.1) ainsi que la chambre de pression inférieure 3 (DK.3) et la chambre de pression supérieure 4 (DK.4) du piston 2 (DK.2) chaque fois sont directement reliées l'une avec l'autre par une conduite hydraulique ( « conduite de dérivation » ) (9c), ladite conduite de dérivation (9c) pouvant être fermée et ouverte par une soupape d'arrêt hydraulique (14) intégrée et activable électriquement par l'électronique de réglage (16), ladite soupape de préférence étant une « soupape à siège », moyennant quoi une compensation de pression et une compensation de volume de fluide hydraulique sont effectuées selon les besoins entre chacunes des chambres de pression inférieures et supérieures.

5. Procédé pour des véhicules selon la revendication 1, pour produire de l'énergie électrique interne au véhicule par conversion de composantes de l'énergie cinétique du véhicule ainsi que de composantes de la gravité agissant sur la carrosserie du véhicule, en électricité, dans lequel le procédé est exécuté à l'aide d'au moins un vérin hydraulique à double action, appelé un élément (2, 5) amortisseur et affaiblisseur hydraulique, par roue du véhicule, et dans lequel un générateur linéaire (7) produisant du courant est situé à l'intérieur de l'élément (2) d'amortissement et d'affaiblissement, ledit générateur se composant du stator (8), de la tige de piston (6.1/6.2) étant située dans l'axe central et d'un actionneur (11) y étant monté, et dans lequel ledit actionneur est relié avec la suspension (4) du véhicule et/ou avec la carrosserie (3) du véhicule de manière appropriée et, par conséquent, reçoit du moins des parties de l'énergie cinétique et des composantes de la gravité comme force agissant, transmettant celles-ci au générateur linéaire (7) de façon mécanique et/ou pneumatique et/ou, de préférence, hydraulique, pour générer de l'électricité par induction,
dans lequel l'électronique de réglage (16), qui est équipée d'algorithmes programmés de façon appropriée, commande toutes les fonctions de façon électronique, utilisant les paramètres de capteur pertinents qui sont la pression, la course, la position, l'accélération, la vitesse, y compris les autres paramètres du véhicule pertinents - comme la vitesse, le ralentissement, l'accélération transversale etc.,
**caractérisé en ce que**
la course et les positions respectives des deux pistons 1 (KO.1) et 2 (KO.2) ainsi que de l'actionneur (11) congruent en mouvement sont supervisées constamment par au moins un capteur approprié, qui est de préférence un capteur tachymètre (WS) électronique et/ou au moins un capteur de pression (DS), la position courante des deux pistons (KO.1/KO.2) entre le point mort supérieur et le point mort inférieur respectif (OT/UT) ainsi étant enregistrée et signalisée à l'électronique de réglage (16).

6. Procédé selon la revendication 5,
**caractérisé en ce qu'**
au moins deux roues (1) du véhicule fournissent leur énergie cinétique à un générateur linéaire (7) commun sous la forme de pression hydraulique (K.hydr).

7. Procédé selon la revendication 5 ou 6,
**caractérisé en ce que**
le mouvement de l'actionneur (11) dans le champ magnétique du stator (8) provoque une force antagoniste contre la direction de mouvement de l'actionneur (11), qui est proportionnelle à l'intensité de champ magnétique et par principe a la même fonction (affaiblissement de mouvements) comme les amortisseurs hydrauliques habituels et le ressort en spirale associé, l'intensité de l'effet d'affaiblissement par l'électronique de réglage (16) étant variée en changeant l'intensité du champ magnétique du stator (8) et/ou éventuellement de l'actionneur (11) par suite d'un changement réglé de façon électronique de l'intensité de courant/de l'amplitude de courant et ainsi de l'intensité de champ magnétique dans le stator (8) ou éventuellement dans l'actionneur (11), si celui-ci produit son champ magnétique par une bobine parcourue par du courant.

8. Procédé selon l'une quelconque des revendications 5 à 7,
**caractérisé en ce que**
l'effet d'affaiblissement magnétique, qui provoque la force antagoniste magnétique-inductive (K.mag), est varié de façon électronique et **en ce que** le mouvement vertical positif (Y1) du piston (KO.2) est freiné, c'est-à-dire affaibli et arrêté dans le cas exceptionnel selon les besoins, juste avant d'arriver au point mort supérieur (OT.2) ou, en cas de besoin, dans n'importe quelle autre position, par alimentation en fluide hydraulique à travers la conduite hydraulique (9.2b), ce processus aussi étant exécuté à dosage variable à travers des soupapes d'étranglement conçues de façon appropriée par l'électronique de réglage (16).

9. Procédé selon l'une quelconque des revendications 5 à 8,
**caractérisé en ce qu'**
un réglage de niveau est réalisé par une programmation correspondante des algorithmes dans l'électronique de réglage (16), par un changement de la distance de travail (A) des pistons 1 (KO.1) et 2 (KO.2), à savoir chaque fois pour les deux roues d'un axe du véhicule, une charge plus intense à cause de chargement diminuant la distance de travail (A) par la force de charge payante (b) du changement de charge, qui rend la distance (B) et la distance (A) congruentes de nouveau, par augmentation de pression dans la chambre de pression 1 (DK-I) et/ou décompression dans la chambre de pression 2 (DK-2) et/ou, en alternative, par augmentation de pression dans la chambre de pression 4 (DK-4) et/ou décompression dans la chambre de pression 3 (DK-3), ainsi rétablissant le même niveau de hauteur de l'axe moyen du véhicule.

10. Procédé selon l'une quelconque des revendications 5 à 9,
**caractérisé en ce qu'**
une compensation de forces centrifuge, du moins en partie, est réalisée dans les virages par des changements de hauteur de la carrosserie, à partir des deux roues extérieures au virage vers les roues intérieures au virage, par le fait que l'électronique de réglage (16) diminue, de façon variable, la distance de travail des pistons (5.1c/5.2c) à partir des jambes de force (2) des suspensions (4) intérieures au virage, proportionellement à la vitesse ou à la force centrifuge effective, et/ou par le fait que la distance de travail (A) des pistons (5.1c/5.2c) dans les jambes de force (2) des suspensions (4) extérieures au virage est augmentée de façon variable, proportionellement à la vitesse ou à la force de centrifuge effective, moyennant quoi le côté intérieur au virage du véhicule (1) est situé au-dessous de la hauteur normale (H. norm) et le côté extérieur au virage du véhicule (1) est situé au-dessus de la hauteur normale (H. norm) et l'axe transversal du véhicule se positionne ainsi de façon incliné vers le côté intérieur du virage par rapport à l'horizontale.

11. Procédé selon l'une quelconque des revendications 5 à 10,
**caractérisé en ce que**
le poids du véhicule (VG) proportionnel est reçu par la chambre de pression 1 (DK.1) remplie de fluide hydraulique par la pompe hydraulique (P.1) à travers la conduite hydraulique (9.1a) et par une soupape d'arrêt unidirectionnelle (14) et est reçu par la contre-pression (Vp.1) disponible du même montant et est supervisé constamment par le capteur (DS.1) de pression et réglé/changé de façon électronique en cas de besoin.

12. Procédé selon l'une quelconque des revendications 5 à 11,
**caractérisé en ce qu'**
au moins un générateur rotatif (29) est utilisé par roue (1) du véhicule, ledit générateur étant entraîné par un hydromoteur (33), et l'hydromoteur est, à son tour, alimenté en fluide hydraulique sous pression, à l'aide d'énergie transmise de façon hydraulique à partir des mouvements de la roue (1) du véhicule et/ou à partir des mouvements relatifs verticaux de la carrosserie, le fluide hydraulique étant généré pour être de l'hydroénergie (pression hydraulique) à partir des cylindres compresseur 1 et 2 (DZ.1/DZ.2), les cylindres étant intégrés dans les vérins hydrauliques 1 et 2 (DZ.1/DZ.2) ou dans le système d'amortissement (5) du véhicule et retransmettant des composantes de l'énergie cinétique et de la gravité vers l'hydromoteur (33), à travers des conduites hydrauliques (9.x), de préférence à travers un multiplicateur de pression (34) et un accumulateur haute pression (15), l'hydromoteur étant effectif comme élément d'entraînement du générateur rotatif (29).

13. Procédé selon l'une quelconque des revendications 5 à 12,
**caractérisé en ce que**
les composantes de l'énergie cinétique et de la gravité d'au moins deux ou plusieurs roues (1) sont converties en hydroénergie (pression hydraulique) par les cylindres compresseur hydrauliques (DZ. 1 à DZ.x) chaque fois associés et sont guidées vers au moins un accumulateur haute pression (15) hydropneumatique, à travers des conduites hydrauliques correspondantes et des soupapes (12), à l'aide de capteurs de pression (DS. x), à travers au moins un multiplicateur de pression (34), par exemple un vérin différentiel, et en partant de là, vers au moins un hydromoteur (33), qui entraîne au moins un générateur rotatif (29), qui ensuite produit du courant de manière habituelle.
